(19) Europäisches Patentamt / European Patent Office / Office européen des brevets

(11) **EP 3 529 960 B1**

(12) **EUROPEAN PATENT SPECIFICATION**

(45) Date of publication and mention
of the grant of the patent:
**22.02.2023 Bulletin 2023/08**

(21) Application number: **16805842.8**

(22) Date of filing: **05.12.2016**

(51) International Patent Classification (IPC):
**H04L 27/26** $^{(2006.01)}$    **H04L 5/00** $^{(2006.01)}$
**H04L 25/02** $^{(2006.01)}$

(52) Cooperative Patent Classification (CPC):
**H04L 27/2613; H04L 5/0051; H04L 25/0204;**
**H04L 25/0226**

(86) International application number:
**PCT/EP2016/079751**

(87) International publication number:
**WO 2018/103815 (14.06.2018 Gazette 2018/24)**

(54) **PILOT SEQUENCE GENERATOR AND CORRESPONDING METHOD AND CHANNEL ESTIMATOR AND CORRESPONDING METHOD**

PILOTSEQUENZGENERATOR UND ZUGEHÖRIGES VERFAHREN UND KANALSCHÄTZER UND ZUGEHÖRIGES VERFAHREN

GÉNÉRATEUR DE SÉQUENCES PILOTES ET PROCÉDÉ ET ESTIMATEUR DE CANAL CORRESPONDANTS ET PROCÉDÉ CORRESPONDANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.08.2019 Bulletin 2019/35**

(73) Proprietor: **Huawei Technologies Co., Ltd.**
**Longgang District**
**Shenzhen, Guangdong 518129 (CN)**

(72) Inventors:
• **KSAIRI, Nassar**
  **80992 Munich (DE)**
• **DEBBAH, Merouane**
  **80992 Munich (DE)**
• **TOMASI, Beatrice**
  **80992 Munich (DE)**

(74) Representative: **Pfenning, Meinig & Partner mbB**
**Patent- und Rechtsanwälte**
**Theresienhöhe 11a**
**80339 München (DE)**

(56) References cited:
**WO-A1-2015/197142**    **WO-A1-2016/180450**
**US-A1- 2011 206 148**    **US-A1- 2016 173 252**

• **KSAIRI NASSAR ET AL: "A multi-service oriented multiple-access scheme for next-generation mobile networks", 2016 EUROPEAN CONFERENCE ON NETWORKS AND COMMUNICATIONS (EUCNC), IEEE, 27 June 2016 (2016-06-27), pages 355-359, XP032957240, DOI: 10.1109/EUCNC.2016.7561062 [retrieved on 2016-09-06]**

**Description**

TECHNICAL FIELD

The present invention is directed to generation of pilot sequences for uplink and/or downlink transmission. Particularly, the present invention relates to a pilot sequence generator (i.e. a device configured to generate corresponding pilot sequences) and to a corresponding method. Further, the present invention is directed to channel estimation. The channel estimation is executed by use of the generated pilot sequences. Particularly, the present invention is directed to a channel estimator (i.e. a device configured to execute the channel estimation) and a corresponding method.

BACKGROUND

In a wireless multiuser access scenario where multiple user terminals need to communicate with a base station (BS), special signals known by the BS are normally transmitted by the terminals so that the BS can get channel state information (CSI) about the wireless links from these terminals. These special signals are called user-specific reference signals (or user-specific pilots). The CSI that is thus obtained can be used to coherently demodulate the uplink signals sent by the user terminals, as coherent demodulation is known to provide higher spectral efficiencies than non-coherent demodulation. This CSI can also help the BS take scheduling decisions for subsequent transmissions to/from the user terminals to determine which of them transmit/receive on which time-frequency radio resources. Furthermore, if the BS has multiple antennas, multiple (co-scheduled) users can transmit on the same time-frequency resources to the BS using multiuser multiple-input multiple-output (MU-MIMO) techniques, thus creating interference for each other's signal at the BS side. In this case, the CSI obtained from user-specific pilots is used by the BS to help in the detection of the signal of each one of the co-scheduled users. One practical MU-MIMO uplink scheme is spatial linear combining (also called receive beamforming) which consists in multiplying the signals received at the BS antennas with user and antenna dependent coefficients that are selected based on the CSI of the co-scheduled users, and then in adding (combining) the resulting signals before passing them to the signal detection and modulation module.

When reciprocity is applicable, CSI acquired at the multi-antenna BS thanks to uplink user-specific pilots can be exploited in the reverse transmission, i.e. in the downlink, as CSI at the transmitter (CSIT), which again allows improving performance when simultaneously transmitting to spatially multiplexed user terminals using MU-MIMO techniques. This is the case, for instance, when the BS uses spatial linear precoding (also called beamforming) which is a MU-MIMO downlink scheme that consists in multiplying the signal destined to each user by coefficients derived from that user (in addition possibly to the other co-scheduled users') CSIT before passing the signal to the BS antennas. By properly setting these precoding coefficients, each user terminal can get its useful signal with sufficient strength while undergoing attenuated interference from the signals intended to the other co-scheduled users.

Another kind of user-specific reference signals is downlink user-specific pilots. These pilots are sent by the BS in MU-MIMO systems that employ downlink spatial precoding and they pass through the same precoding that the BS applies to data symbols. This way, user terminals can learn their respective effective downlink channels, i.e. the scalar channel that is experienced at the terminal side as a result of applying spatial precoding at the BS side. This knowledge of the effective downlink channel is necessary for equalization and coherent demodulation purposes at the user terminals.

Whether used for coherent demodulation, scheduling decisions, spatial combining or spatial precoding, the resources (in time and/or frequency) devoted to user-specific pilots are subtracted from those used for data transmission and thus represent an overhead for the wireless system. In MU-MIMO, this overhead is even larger since user-specific pilots are multiplexed on the same time-frequency resources and thus their length should be made to increase with the number of user terminals that are co-scheduled on these resources. Otherwise, the quality of channel estimation based on user-specific pilots might suffer severe degradation due to excessive interference among the pilot sequences. If the number of user terminals that need to be served on the same time-frequency resources with MU-MIMO is very large, the pilot overhead might significantly reduce the spectral efficiency and ultimately the achievable data rates of these users. The need to simultaneously serve such a large number of user terminals could arise in scenarios of practical interest. One example is the multi-service scenario in which the BS is required to serve a large number of machine-to-machine (M2M) connections while continuing to support the more conventional broadband links to/from user handheld terminals. Another example is the crowd scenario in which the BS needs to operate in an area with a very dense deployment of user terminals, such as a sports venues, for example. Using state-of-the-art user-specific pilots in such situations could result in a severe reduction of the system throughput and of the achievable data rates of the individual links due to excessive pilot overhead and/or to degraded CSI.

Thus, it is crucial to propose new methods to construct and multiplex user-specific pilots such that the throughput gain is recovered.

International patent application WO 2016/180 450 A1 provides an apparatus and method for allocating time-frequency resource, which comprises allocating a first group-specific data time-frequency resource to data sequences associated to UEs comprised in a first UE group of the plurality of UE groups, and allocating a second group-specific data time-frequency data resource to data sequences associated to UEs comprised in a second UE group of the plurality of UE groups, where the first and the second group-specific data time-frequency resources at least partly overlap in time domain.

K. Nassar et al., "A Multi-Service Oriented Multiple-Access Scheme for Next-Generation Mobile Networks", 2016 European Conference on Networks and Communications (EUCNC), IEEE, 27 June 2016, pp. 355-359, presents multi-service oriented multiple access (MOMA), an integrated access scheme for massive connections with diverse QoS profiles and/or traffic patterns originating from both handheld devices and machine-to-machine (M2M) transmissions. MOMA is based on a) establishing separate classes of users based on relevant criteria that go beyond the simple handheld/M2M split, b) class dependent hierarchical spreading of the data signal and c) a mix of multiuser and single-user detection schemes at the receiver.

SUMMARY

The object of the present invention is improving the generation of pilot sequences for an uplink and/or for a downlink transmission.

The object of the present invention is achieved by the solution provided in the enclosed independent claims. Advantageous implementations of the present invention are further defined in the respective dependent claims, in the description, and/or in the appended figures. In particular, the invention, described herein, allows generation of pilot sequences for a large number of user terminals by maintaining the system throughput and/or achievable data rates of (individual) data transmission links. Particularly the generation of pilot sequences, implemented according to the present invention, is intended to avoid the reduction of the system throughput and/or of the achievable data rates of (individual) data transmission links. The present invention proposes a pilot construction and, thus, a multiplexing method for both uplink and downlink user-specific reference signals. The proposed method makes use of the code domain in the aim of creating different sub-sets of pilots. One of these sub-sets is made up of sequences that are orthogonal both to each other and to the other pilot sub-sets. The users that are assigned pilots from this sub-set will be interference free and will get the best possible channel estimation quality, but their maximum number will be limited due to the orthogonality constraint. The other sub-sets are also orthogonal to each other but are made up of sequences that are non-orthogonal in a controlled manner. A controlled non-orthogonality leads on one hand to a controlled degradation of the channel estimation quality. On the other hand, it allows to overload the available resources so that the number of pilots in each one of the overloaded sub-sets is larger than the length (in symbols) of their pilot sequences. Furthermore, different degrees of overloading across the different pilot sub-sets are possible, so that some of these sub-sets can be severely overloaded, to serve a large number of terminals. Exemplary environments with large number of terminals or with very dense deployment of terminals respectively comprise, for example, massive deployments of IoT (Internet of Things) devices and/or a large crowd in a stadium using low-demanding services such as social networks messaging. Thanks to the way the proposed pilot design scheme uses the code domain, this kind of extreme overloading will not generate interference for the other pilot sub-sets that are assigned to more demanding applications in terms of their quality of service, such as live video streaming.

BRIEF DESCRIPTION OF THE DRAWINGS

The above-described aspects and implementation forms of the present invention will be explained in the following description of specific embodiments in relation to the enclosed drawings, in which:

Fig. 1    shows an exemplary arrangement of a pilot sequence generator according to an embodiment of the present invention.

Fig. 2    shows steps executed by the pilot sequence generator according to an embodiment of the present invention.

Fig. 3    shows an exemplary assignment of M+1 pilot sequence sub-sets to M+1 groups of communication devices according to an embodiment of the present invention.

Fig. 4    shows exemplary sub-steps of the pilot sequence set generation step according to an embodiment of the present invention.

Fig. 5    shows an exemplary execution of pilot sequence generation according to an embodiment of the present invention.

Fig. 6      shows exemplary sequences of steps executed according to an embodiment of the present invention, said steps starting from pilot sequence generation and ending at channel estimation.

Fig. 7      shows an exemplary arrangement of a channel estimator according to an embodiment of the present invention.

Fig. 8      shows steps executed by the channel estimator according to an embodiment of the present invention.

Fig. 9      shows a generation of user communication device specific pilot sequences from orthogonal cover codes (OCCs) according to an embodiment of the present invention, wherein the number of user communication device specific pilot sequences is larger than the number of OCCs.

Fig. 10      shows a generation of user communication device specific pilot sequences from cyclic shift (CS) sequences according to an embodiment of the present invention, wherein the number of user communication device specific pilot sequences is larger than the number of CS sequences.

Fig. 11      shows a look-up table, arranged to store a plurality of pilot sequences, according to an embodiment of the present invention.

Fig. 12      shows an exemplary arrangement of a user communication device according to an embodiment of the present invention.

## DETAILED DESCRIPION OF THE EMBODIMENTS

Generally, it has to be noted that all arrangements, devices, modules, components, models, elements, units, entities, and means and so forth described in the present application could be implemented by software or hardware elements or any kind of combination thereof. All steps which are performed by the various entities described in the present application as well as the functionality described to be performed by the various entities are intended to mean that the respective entity is adapted to or configured to perform the respective steps and functionalities. Even if in the following description of the specific embodiments, a specific functionality or step to be performed by a general entity is not reflected in the description of a specific detailed element of the entity which performs the specific step or functionality, it should be clear for a skilled person that these methods and functionalities can be implemented in respective hardware or software elements, or any kind of combination thereof. Further, the method of the present invention and its various steps are embodied in the functionalities of the various described apparatus elements.

Moreover, any of the embodiments and features of any of the embodiments, described herein, may be combined with each other, unless a combination is explicitly excluded.

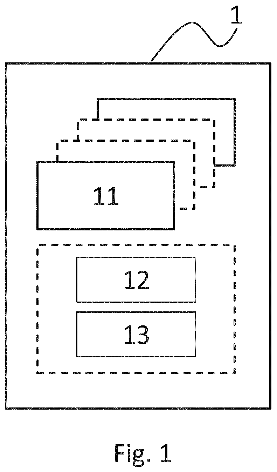

Fig. 1 shows an exemplary arrangement of a pilot sequence generator 1 according to an embodiment of the present invention. The pilot sequence generator 1 is arranged to generate pilot sequences for uplink and/or for downlink transmissions.

According to the present embodiment, the pilot sequence generator 1 comprises a transmitting entity 12, configured to execute transmission of data, and a receiving entity 13, configured to execute reception of data. According to an embodiment, the transmitting entity 12 and the receiving entity 13 are provided as one entity (e.g., transceiver), as indicated in Fig. 1 by the box with dashed lines. Thus, any one of the transmission steps, which is described herein as being executed by the pilot sequence generator 1, is particularly executed by the transmitting entity 12. Any one of the reception steps, which is described herein as being executed by the pilot sequence generator 1, is particularly executed by the receiving entity 13.

Further, the pilot sequence generator 1 comprises one or more processing entities 11 configured to execute different processing steps, except for the transmission and reception of data, which are executed accordingly by the transmitting entity 12 and the receiving entity 13. Thus, any one of the steps, which is described herein as being executed by the pilot sequence generator 1 and which does not refer to data transmission or reception, is particularly executed by at least one of the one or more processing entities 11.

In has to be noted, that the presence of the transmitting entity 12, receiving entity 13 and/or transceiver in the pilot sequence generator 1 is optional. Their presence is implementation-specific and depends on the environment of the pilot sequence generator 1 and/or its further functions in a particular implementation of the pilot sequence generator 1.

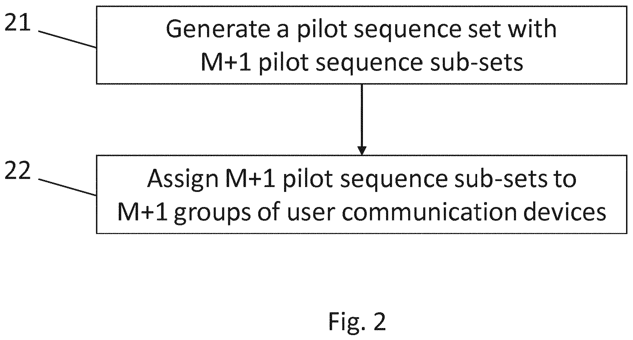

Fig. 2 shows steps 21, 22 executed by the pilot sequence generator 1 according to an embodiment of the present invention. Said steps 21, 22 are executed for generating pilot sequences for an uplink and/or a downlink transmission. Steps 21, 22 are executed, for example, by the one or more processing entities 11 of the pilot sequence generator 1.

In step 21, the pilot sequence generator 1 generates a pilot sequence set with M+1 pilot sequence sub-sets, wherein M is a positive integer that is equal to or greater than one. In the generated pilot sequence set, each pilot sequence sub-set is orthogonal or at least partially orthogonal to each further pilot sequence sub-set of the M+1 pilot sequence sub-sets of said pilot sequence set. According to an embodiment, each pilot sequence sub-set is orthogonal or at least partially orthogonal in the code domain, frequency domain and/or time domain to each further pilot sequence sub-set of the M+1 pilot sequence sub-sets of said pilot sequence set.

In step 22, the pilot sequence generator 1 assigns the M+1 pilot sequence sub-sets to M+1 groups of user communication devices, wherein each pilot sequence sub-set of the M+1 pilot sequence sub-sets is assigned to one group of user communication devices. According to the present embodiment, each group of user communication devices comprises one or more user communication devices. By the assignment 22, the one or more user communication devices of each group of user communication devices are configured to use, for the uplink and/or for the downlink transmission, pilot sequences of the pilot sequence sub-set assigned to the respective group of user communication devices.

The user communication devices comprise any kind of user communication devices. For example, user communication devices comprise static and/or mobile communication devices. According to an embodiment, the user communication devices comprise communication devices that are involved in an IoT communication. The present invention is not limited by a specific kind of user communication devices. In general, the user communication devices comprise devices that do not constitute a communication network, but use the communication network for communication purposes.

According to an embodiment combinable with one or more, i.e. any one of the embodiments described herein, the assignment 22 is based on criteria including at least one of the following: user communication device service requirements, user communication device channel conditions, user communication device position within the cell and/or user communication device distance to a serving base station. According to a further embodiment combinable with one or more, i.e. any one of the embodiments described herein, the assigning 22 comprises, for each pilot sequence sub-set of the M+1 pilot sequence sub-sets, assigning 22 pilot sequences of the pilot sequence sub-set to the one or more user communication devices of the group of user communication devices, which is assigned to the pilot sequence sub-set. Additionally, according to a further embodiment combinable with one or more, i.e. any one of the embodiments described herein, the pilot sequence generator 1 is configured to execute the assignment 22 by permitting the one or more user communication devices of a group of user communication devices of the M+1 groups of user communication devices to select their own pilot sequences out of the pilot sequences of the pilot sequence sub-set assigned to the group of user communication devices.

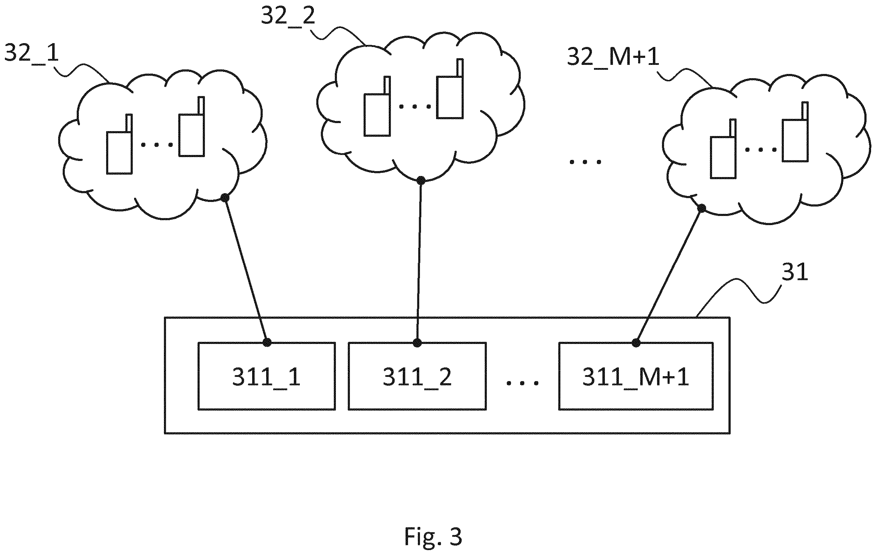

Fig. 3 shows an exemplary assignment of M+1 pilot sequence sub-sets to M+1 groups of communication devices according to an embodiment of the present invention. One or more, i.e. any one of features explained by use of Fig. 3 are combinable with one or more, i.e. any one of the embodiments described herein. In particular, Fig. 3 shows a result of a pilot sequence generation (see, for example, steps of Fig. 2) executed by the pilot sequence generator 1.

According to the embodiment of Fig. 3, a pilot sequence set 31 has been generated 21 by the pilot sequence generator 1. The generated 21 pilot sequence set 31 comprises M+1 pilot sequence sub-sets 311_1, 311_2, ..., 311_M+1, wherein M is an integer and M ≥ 1. The M+1 pilot sequence sub-sets 311_1, 311_2, ..., 311_M+1 are generated 21 such that they are orthogonal or at least partially orthogonal to each other. The M+1 pilot sequence sub-sets 311_1, 311_2, ..., 311_M+1 may comprise different numbers of user communication devices. I.e. each pilot sequence sub-set 311_1, 311_2, ..., 311_M+1 may comprise a number of pilot sequences that it different from a number of pilot sequences of at least one further pilot sequence sub-set 311_1, 311_2, ..., 311_M+1.

Further, M+1 groups 32_1, 32_2, ..., 32_M+1 of user communication devices are present according to the embodiment of Fig. 3. Each one of the M+1 groups 32_1, 32_2, ..., 32_M+1 of user communication devices comprises one or more user communication devices. According to an embodiment combinable with one or more, i.e. any one of the embodiments described herein, the M+1 groups 32_1, 32_2, ..., 32_M+1 of user communication devices comprise different numbers of user communication devices. I.e., in this case, each group 32_1, 32_2, ..., 32_M+1 of user communication devices comprises a number of user communication devices that is different from a number of user communication devices of at least one further group 32_1, 32_2, ..., 32_M+1 of user communication devices.

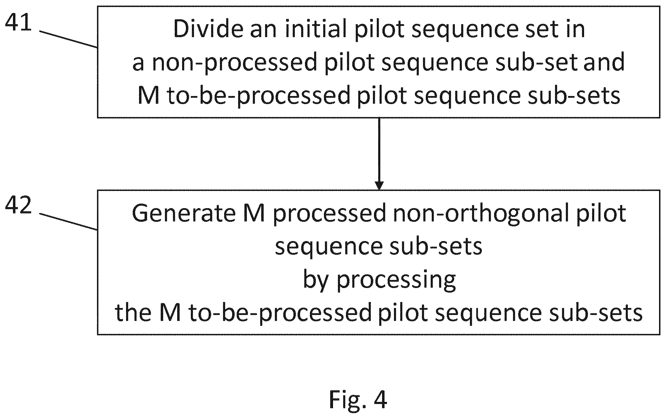

Fig. 4 shows exemplary sub-steps 41, 42 of the pilot sequence set 31 generation step 21 according to an embodiment of the present invention. Thus, the embodiment of Fig. 4 can be seen as an embodiment that supplements the above-described embodiments. Particularly, one or more, i.e. any one of the features of the embodiment of Fig. 4 are combinable with one or more, i.e. any one of the embodiments described herein.

According to the embodiment of Fig. 4, when generating 21 the pilot sequence set 31, the pilot sequence generator 1 divides 41 an initial pilot sequence set, comprising orthogonal or at least partially orthogonal pilot sequences, in a non-processed pilot sequence sub-set and M to-be-processed pilot sequence sub-sets. Thus, a division of the initial pilot sequence set into M+1 initial sub-sets (one non-processed pilot sequence sub-set and M to-be-processed pilot sequence sub-sets) is done. As mentioned above, according to an embodiment combinable with one or more, i.e. any one of the embodiments described herein, the each pilot sequence of the initial pilot sequence set is orthogonal or at least partially orthogonal (e.g., in the code domain, frequency domain and/or time domain) to each further pilot sequence in the initial pilot sequence set.

According to an embodiment combinable with one or more, i.e. any one of the embodiments described herein, the non-processed pilot sequence sub-set comprises at least on pilot sequence, and/or each to-be-processed pilot sequence sub-set of the M to-be-processed pilot sequence sub-sets comprises at least two pilot sequences. Further, according to an embodiment combinable with one or more, i.e. any one of the embodiments described herein, the M to-be-processed pilot sequence sub-sets are arranged such that at least one to-be-processed pilot sequence sub-set of the M to-be-processed pilot sequence sub-sets has a number of pilot sequences that is different from a number of a pilot sequences of at least one another to-be-processed pilot sequence sub-set of the M to-be-processed pilot sequence sub-sets. Additionally, according to an embodiment combinable with one or more, i.e. any one of the embodiments described herein, the non-processed pilot sequence sub-set comprises at least two pilot sequences and each one of the pilot sequences of the non-processed pilot sequence sub-set is orthogonal to each further pilot sequence of the non-processed pilot sequence sub-set. For example, each one of the pilot sequences of the non-processed pilot sequence sub-set is orthogonal in the code domain, frequency domain and/or time domain to each further pilot sequence of the non-processed pilot sequence sub-set.

Subsequently, in step 42, the pilot sequence generator 1 uses the M to-be-processed pilot sequence sub-sets to generate M processed non-orthogonal pilot sequence sub-sets. For this purpose, the pilot sequence generator 1 executes with regard to each to-be-processed pilot sequence sub-set of the M to-be-processed pilot sequence sub-sets the following: the pilot sequence generator 1 generates for the respective to-be-processed pilot sequence sub-set a processed non-orthogonal pilot sequence sub-set by multiplying a to-be-processed pilot sequence sub-set matrix, comprising pilot sequences of the respective to-be-processed pilot sequence sub-set as columns, with a complex matrix. The columns of matrix resulting from the respective multiplication represent the respective processed non-orthogonal pilot sequence sub-set.

According to an embodiment combinable with one or more, i.e. any one of the embodiments described herein, the number of rows of the complex matrix is equal to the number of columns of the to-be-processed pilot sequence sub-set matrix, comprising pilot sequences of the respective to-be-processed pilot sequence sub-set as columns, and a number of columns of the complex matrix is greater than the number of rows of the complex matrix. In this way, by multiplying a to-be-processed pilot sequence sub-set with the complex matrix, more pilot sequences are present in the respective processed non-orthogonal pilot sequence sub-set resulting from the multiplication. This contributes to the solution of the present invention because more pilot sequences are provided and a reduction of system throughput and/or achievable data rates can be avoided in particular in environments where a large number of user terminals is present.

After the step 42 has been executed with regard to each one of the M to-be-processed pilot sequence sub-sets, M processed non-orthogonal pilot sequence sub-sets are present. It has to be noted that the term "non-orthogonal pilot sequence sub-set" means that the pilot sequences of the respective sub-set are not orthogonal (e.g., in code domain, in time domain and/or in frequency domain) to each other. However, each non-orthogonal pilot sequence sub-set of the M non-orthogonal pilot sequence sub-sets is orthogonal (e.g., in code domain, in time domain and/or in frequency domain) to each other non-orthogonal pilot sequence sub-set of the M non-orthogonal pilot sequence sub-sets.

According to an embodiment combinable with one or more, i.e. any one of the embodiments described herein, at least one processed non-orthogonal pilot sequence sub-set of the M processed non-orthogonal pilot sequence sub-sets has a number of pilot sequences that is different from a number of pilot sequences of at least one further processed non-orthogonal pilot sequence sub-set of the M processed non-orthogonal pilot sequence sub-sets.

The non-processed pilot sequence sub-set, resulting from the execution of step 41, and the M processed non-orthogonal pilot sequence sub-sets, resulting from the execution of step 42, represent the M+1 pilot sequence sub-sets 311_1, 311_2, ..., 311_M+1 of the generated 21 pilot sequence set 31.

As mentioned above, subsequently, the M+1 pilot sequence sub-sets (i.e. the non-processed pilot sequence sub-set and the M processed non-orthogonal pilot sequence sub-sets) 311_1, 311_2, ..., 311_M+1 are assigned 22 to the M+1 groups 32_1, 32_2, ..., 32_M+1 of user communication devices.

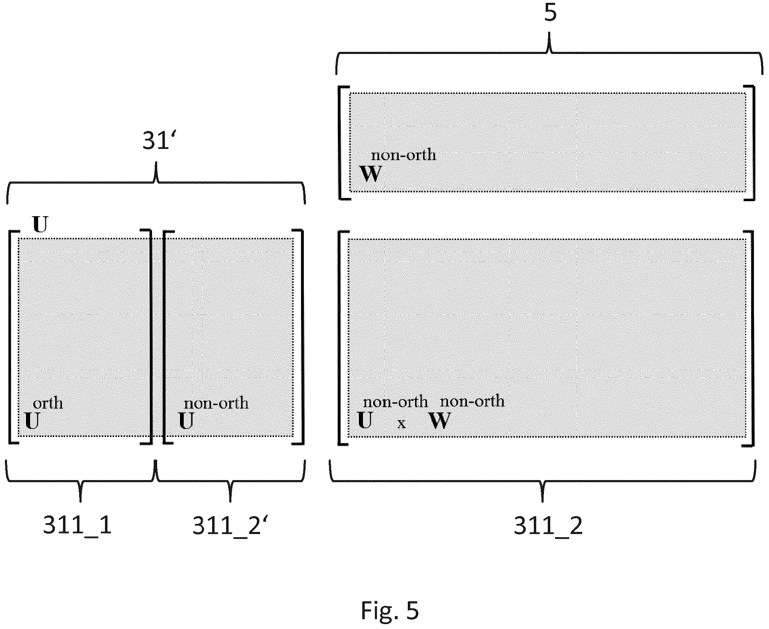

Fig. 5 shows an exemplary execution of pilot sequence generation according to an embodiment of the present invention. The embodiment of Fig. 5 shows some specific arrangement of the features of the present invention. It has to be pointed out that one or more, i.e. any one of the features of the embodiment of Fig. 5 are combinable with one or more, i.e. any one of the embodiments described herein.

According to the embodiment of Fig. 5, a baseline code matrix U composed of N orthogonal or at least partially orthogonal columns is provided as an initial pilot sequence set 31', wherein the N columns of the code matrix $\mathbf{U}$ represent the initial pilot sequences of the initial pilot sequence set 31'. As mentioned above, the orthogonality is considered, for example, in the time, frequency and/or code domain.

For generating 21 the M+1 pilot sequence sub-sets 311_1, 311_2, ..., 311_M+1, matrix $\mathbf{U}$ is divided 41 in a non-processed pilot sequence sub-set 311_1, represented in Fig. 5 by matrix $\mathbf{U}^{orth}$, and in one to-be-processed pilot sequence sub-set 311_2', represented in Fig. 5 by matrix $\mathbf{U}^{non\text{-}orth}$. According to the embodiment of Fig. 5, M is set to be one (i.e. M=1) for sake of simplicity. Thus, $\mathbf{U} = \langle \mathbf{U}^{orth} | \mathbf{U}^{non\text{-}orth} \rangle$, where $\mathbf{U}^{orth}$ is composed of $N^{orth}$ columns or $N^{orth}$

orthogonal pilot sequences, which are orthogonal among each other, and $\mathbf{U}^{\text{non-orth}}$ is composed of $N^{\text{non-orth}}$ columns or $N^{\text{non-orth}}$ non-orthogonal pilot sequences. The columns (i.e. pilot sequences) of $\mathbf{U}^{\text{orth}}$ and the columns (i.e. pilot sequences) of $\mathbf{U}^{\text{non-orth}}$ are orthogonal to each other. Here, the abbreviation "orth" stands for "orthogonal", and the abbreviation "non-orth" stands for "non-orthogonal" or "not orthogonal", respectively.

The columns (i.e. pilot sequences) of $\mathbf{U}^{\text{orth}}$ are assigned 22 to $N^{\text{orth}}$ user communication devices of a first group of communication devices. Because M=1, two groups of user communication devices are handled according to the embodiment of Fig. 5.

Let $\mathbf{W}^{\text{non-ortn}}$ be a $N^{\text{non-orth}} \times K^{\text{non-orth}}$ (generally complex) matrix 5. According to the present embodiment, $N^{\text{non-orth}}, K^{\text{non-orth}}$ are chosen such that $N^{\text{non-orth}} < K^{\text{non-orth}}$. As for the entries of $\mathbf{W}^{\text{non-orth}}$, their selection will be addressed later on.

Instead of directly considering or assigning the columns (i.e., pilot sequences) of $\mathbf{U}^{\text{non-orth}}$ as or to pilot sequences, columns (i.e., pilot sequences) of the matrix multiplication $\mathbf{U}^{\text{non-orth}} \times \mathbf{W}^{\text{non-ortn}}$ are assigned to $K^{\text{non-orth}}$ "non-orthogonal" user communication devices of the second group of user communication devices. The expression "non-orthogonal user communication devices" means that the respective user communication devices of the second group of communication devices will get assigned 22 non-orthogonal pilot sequences. Indeed, each "non-orth" pilot sequence is a linear combination of all the columns of $\mathbf{U}^{\text{non-orth}}$ with coefficients that are taken from one of the columns of $\mathbf{W}^{\text{non-orth}}$.

Thus, the matrix $\mathbf{U}^{\text{non-orth}}$, representing the to-be-processed pilot sequence sub-set 311_2', is multiplied with the complex matrix $\mathbf{W}^{\text{non-ortn}}$ 5 to obtain a processed non-orthogonal pilot sequence set 311_2 represented by $\mathbf{U}^{\text{non-orth}} \times \mathbf{W}^{\text{non-ortn}}$. Columns of the matrix $\mathbf{U}^{\text{non-orth}} \times \mathbf{W}^{\text{non-orth}}$ represent the non-orthogonal pilot sequences of the processed non-orthogonal pilot sequence set 311 2.

Due to this non-orthogonality, the channel estimation step for each "non-orthogonal" user communication device at the base station will undergo interference/contamination from the signals of the other "non-orthogonal" transmissions. However, a proper choice of $\mathbf{W}^{\text{non-orth}}$ (and implicitly of $N^{\text{non-orth}}$, $K^{\text{non-orth}}$) as well as the use of joint channel estimation for the "non-orthogonal" user communication devices will help keep this contamination at controlled levels. Moreover, thanks to the orthogonality between the sub-matrices or sub-sets $\mathbf{U}^{\text{orth}}$ and $\mathbf{U}^{\text{non-orth}}$, the non-orthogonality of the "non-orthogonal" user communication devices will cause no interference/contamination to the pilot sequences of the "orthogonal" user communication devices.

It has to be noted that with the pilot sequence generation method of the present invention, the number of generated pilots and, hence, the number of user communication devices that can be simultaneously served is

$$K \triangleq N^{\text{non-orth}} + K^{\text{non-orth}}.$$ Thus, the present invention increases the number of generated pilots and also the number of user communication devices that can be simultaneously served Each one of these pilot sequences is composed of a number of pilot symbols equal to $N = N^{\text{non-orth}} + N^{\text{non-orth}}$. Since the inequality $N^{\text{non-orth}} < K^{\text{non-orth}}$ holds by construction, then $N < K$. In this way, pilot overhead reduction is achieved.

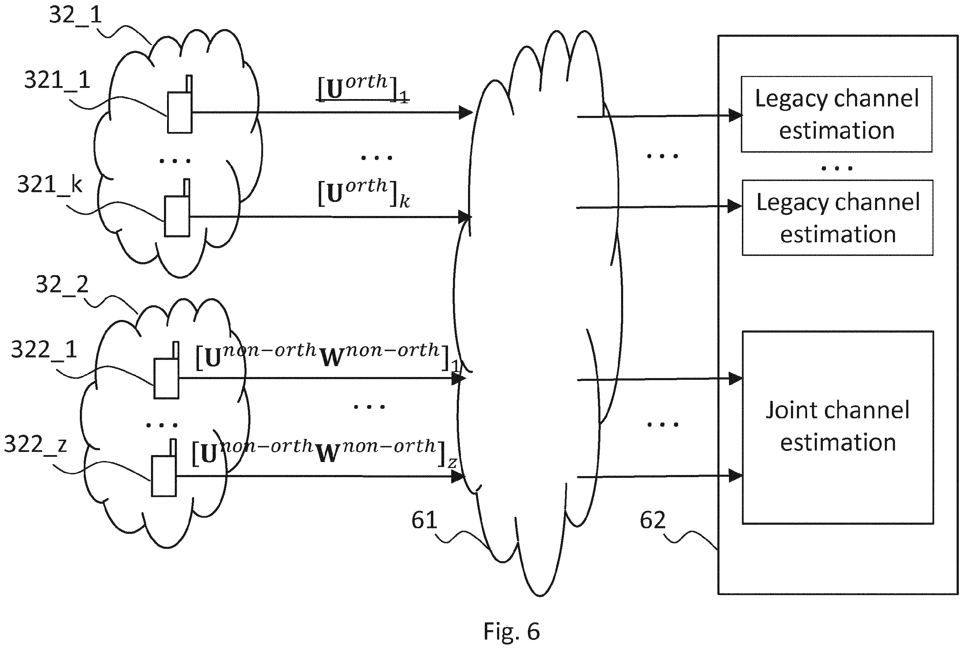

Fig. 6 shows exemplary sequences of steps executed according to an embodiment of the present invention, said steps starting from pilot sequence generation and ending at channel estimation. The exemplary sequences of steps are implementable, for example, in MU-MIMO where user communication device specific pilot sequences are generated.

Fig. 6 is based on the above-described embodiments and, in particular, supplements them. It has to be pointed out that one or more, i.e. any one of the features of the embodiment of Fig. 6 are combinable with one or more, i.e. any one of the embodiments described herein. The embodiment of Fig. 6 is exemplary based on the embodiment of Fig. 5.

In Fig. 6, columns of the matrix $\mathbf{U}^{\text{orth}}$ (being the non-processed pilot sequence sub-set 311_1) of Fig. 5 are used as signatures to distinguish between the channels of the different (orthogonal) user communication devices 321_1, ..., 321_k of the first group 32_1 of user communication devices. Further, in Fig. 6, columns of matrix $\mathbf{W}^{\text{non-orth}}$ are used as signatures to distinguish between the channels of the different (non-orthogonal) user communication devices 322_1, ..., 322_z of the second group of user communication devices. One way of selecting $\mathbf{W}^{\text{non-orth}}$ is thus such that the minimum cross-correlation among its columns is as low as possible. This is equivalent to setting these columns to be any $K^{\text{non-orth}}$ points on a $N^{\text{non-orth}}$-dimensional complex sphere of radius 1 with a minimal pairwise angle that is as large as possible. Other ways of selecting $\mathbf{W}^{\text{non-orth}}$ that exploit additional knowledge about the channels of the "non-orthogonal" user communication devices 322_1, ..., 322_z of the second group 32_2 of user communication devices, e.g., their statistics, can also be used when such knowledge is available, for example, at the base station (BS).

Left side of Fig. 6 visualizes the utilization of the generated pilot sequence sub-sets. Here, a non-processed pilot sequence sub-set 311_1 or matrix $\mathbf{U}^{\text{orth}}$ respectively has been obtained by executing step 41 on the initial pilot sequence set or matrix $\mathbf{U}$ respectively, and the pilot sequences of the non-processed pilot sequence sub-set 311_1 or columns of matrix $\mathbf{U}^{\text{orth}}$ respectively have been assigned 22 to the first group 32_1 of user communication devices 321_1, ..., 321_k. In Fig. 6, the number k of the pilot sequences of the non-processed pilot sequence sub-set 311_1 or columns of matrix $\mathbf{U}^{\text{orth}}$ respectively corresponds to the number k of the user communication devices 321_1, ..., 321_k of the first group 32_1 of user communication devices. Each i-th ($1 \le i \le k$) user communication device 321_1, ..., 321_k of the first group 32_1 of user communication devices transmits one respective pilot sequence to BS 62 via a respective uplink channel (e.g., MU-MOMO uplink channel) 61, wherein the respective pilot sequence corresponds to a respective (i.e. i-th) column of the matrix $\mathbf{U}^{orth}$.

Further, a processed non-orthogonal pilot sequence sub-set 311_2 or matrix $\mathbf{U}^{non\text{-}orth} \times \mathbf{W}^{non\text{-}orth}$ respectively has been obtained by executing step 42, and the pilot sequences of the processed non-orthogonal pilot sequence sub-set 311_2 or the columns of the matrix $\mathbf{U}^{non\text{-}orth} \times \mathbf{W}^{non\text{-}orth}$ respectively have been assigned 22 to the second group 32_2 of user communication devices 322_1, ..., 322_z. As shown in Fig. 6, the number z of the pilot sequences of the processed non-orthogonal pilot sequence sub-set 311_2 or columns of matrix $\mathbf{U}^{non\text{-}orth} \times \mathbf{W}^{non\text{-}orth}$ respectively corresponds to the number z of the user communication devices 322_1, ..., 322_z of the second group 32_2 of user communication devices. Each j-th ($1 \leq j \leq z$) user communication device 322_1, ..., 322_z of the second group 32_2 of user communication devices transmits one respective pilot sequence to BS 62 via a respective uplink channel (e.g., **MU-MIMO** uplink channel) 61, wherein the respective pilot sequence corresponds to a respective (i.e. j-th) column of the matrix $\mathbf{U}^{non\text{-}orth} \times \mathbf{W}^{non\text{-}orth}$. In Fig. 6, only the matrix $\mathbf{W}^{non\text{-}orth}$ is indicated for sake of simplicity of Fig. 6 because the number of columns of $\mathbf{W}^{non\text{-}orth}$ is the same as the number of columns of $\mathbf{U}^{non\text{-}orth} \times \mathbf{W}^{non\text{-}orth}$, i.e. z. In response to the reception of the pilot sequences, according to the present embodiment, the BS 62 uses combining/precoding schemes that are aware of the "orthogonal" and "non-orthogonal" grouping of user communication devices. In this way, one can maintain the effect of the by-design pilot contamination within the "non-orthogonal" group 32_2 leaving the "orthogonal" group 32_1 contamination free. One example of such combining/precoding is single-user detection/precoding at the BS 62. As for signaling, only a slight modification of existing pilot assignment bits in scheduling grants and radio resource control (RRC) messages in current wireless communications standards is needed. This change only incurs $\log_2 (X) - \log_2 (N)$ additional bits in these signaling messages. For example, with 4-times overloading $(K = 4N)$ only 2 additional bits are needed. These additional bits are needed to inform the user communication devices 322_1, ..., 322_z of the "non-orthogonal" group 32_2 of the particular column of the matrix $\mathbf{W}^{non\text{-}orth}$ that they should use as their own signature.

According to the embodiment of Fig. 6, the BS 62 executes channel estimation for the user communication devices 321_1, ..., 321_k of the first or "orthogonal" group 32_1 of user communication devices 321_1, ..., 321_k based on the pilot sequences $\mathbf{u}_1^{orth} \; ... \; \mathbf{u}_{N^{orth}}^{orth}$, where $\mathbf{u}_i^{orth}$ for i = 1 ... $N^{orth}$ designates the i-th column of the matrix $\mathbf{U}^{orth}$, i.e. $\mathbf{u}_i^{orth}$ is the i-th sequence of the non-processed pilot sequence sub-set 311_1, which comprises orthogonal pilot sequences that are orthogonal among each other. For the first or "orthogonal" group 32_1 of user communication devices 321_1, ..., 321_k, the BS 62 is configured to execute any one of conventional channel estimation methods, e.g. a legacy channel estimation as indicated in Fig. 6.

As to the second or "non-orthogonal" group 32_2 of user communication devices 322_1, ..., 322_z, the BS 62 executes channel estimation for the respective user communication devices 322_1, ..., 322_z based on pilot sequences of the processed non-orthogonal pilot sequence sub-set 311_2, said pilot sequences being the columns of the matrix $\mathbf{U}^{non\text{-}orth} \times \mathbf{W}^{non\text{-}orth}$. For the second or "non-orthogonal" group 32_2 of user communication devices 322_1, ..., 322_z, the BS 62 is configured to execute a joint channel estimation method as indicated in Fig. 6. The joint channel estimation method comprises, for example, a multiuser least squares (LS) method or multiuser minimum mean square error (MMSE) method, both being well known and, therefore, being not described in more detail herein.

Thus, in Fig. 6 the BS 62 itself can be seen as a channel estimator or the BS 62 comprises a channel estimator as a component of the BS 62.

As can be gathered from the aforesaid and as shown throughout the whole application, the scheme used herein is a hybrid (orthogonal/non-orthogonal) sequence construction and multiplexing method that allows to precondition the user communication device specific pilot sequences of a number of user communication devices 321_1, ..., 321_k, 322_1, ..., 322_z in a way that they can be sent using a much smaller number of orthogonal codes or pilot sequences respectively.

One advantage of this pilot sequence transmission scheme is the possibility of multiplexing the user communication device specific pilots of a much larger number of simultaneous connections than what can be accommodated with existing solutions while requiring the same pilot overhead as them, thus allowing the BS 62 to communicate simultaneously with larger numbers of connected user communication devices 321_1, ..., 321_k, 322_1, ..., 322_z. This is done while guaranteeing the best possible channel estimation precision for one category of user communication devices 321_1, ..., 321_k, 322_1, ..., 322_z, typically those with broadband/high data rate requirements, who need the most such channel estimation quality. This performance is not possible with existing solutions which can only accommodate a small number of simultaneous connections with accepted channel estimation quality and which result in severe degradation of this quality if the number of simultaneous connections is increased. For instance, getting CSI on a given frequency band from a large number of user communication devices using orthogonal pilot sequences can only be achieved by time-multiplexing these pilot sequences. This will have the negative effect of making the subsequent pilot transmissions from each user communication device less periodic and more separated in time, thus degrading their channel estimation quality. A similar degradation also occurs if non-orthogonal pilots are used instead. Indeed, with non-orthogonal pilots, the channel estimate computed for each connection at the BS 62 will be contaminated with the interference coming from the pilot transmissions of the other simultaneous connections. In contrast, the proposed method offers the possibility of balancing orthogonal and non-orthogonal user communication device specific pilot transmissions.

Another advantage is the possibility of increasing the system throughput as compared to existing user communication device specific pilot multiplexing solutions by means of reducing the average pilot overhead needed to communicate with the active devices in the system. Again, this is achieved while maintaining for a sub-set of user communication devices, e.g., those running broadband services, the best possible channel estimates. As shown below in more detail, with numerical results, that neither purely orthogonal nor purely non-orthogonal user-specific pilot sequences can outperform the proposed design in terms of system throughput. Indeed, with the possibility of tuning the percentage of connections that get orthogonal pilot sequences 311_1 and of those that get non-orthogonal pilot sequences 311_2, the novel hybrid orthogonal/non-orthogonal pilot sequence construction is guaranteed to achieve a sum data rate that is at worst equal to, but typically larger than, the sum data rate of existing solutions.

Thus, the present invention provides a method to simultaneously transmit a (possibly large) number of user specific reference signals that are needed either by the base station 62 of a wireless system to acquire uplink channel state information from a possibly large number of user communication devices 321_1, ..., 321_k, 322_1, ..., 322_z that are scheduled on the same time-frequency resources; or by these user communication devices 321_1, ..., 321_k, 322_1, ..., 322_z to learn their respective effective downlink channels. The user communication devices 321_1, ..., 321_k, 322_1, ..., 322_z may belong to different service classes with different quality of service requirements.

As shown herein, the method consists in creating M+1≥2 sub-sets of communication device specific pilot sequences starting from a set of orthogonal sequences 31'. These sub-sets will be assigned in a flexible manner to M+1 distinct groups 32_1, 32_2, ..., 32_M+1 of user communication devices 321_1, ..., 321_k, 322_1, ..., 322_z, each possibly with a different service requirement. The method uses a hierarchical spreading technique to achieve the following.

The pilots of the first sub-set or the non-processed pilot sequence sub-set 311_1 respectively are orthogonal to each other by design, resulting in the best possible channel estimation quality for the first group 32_1 of user communication devices 321_1, ..., 321_k.

The pilot sequences of each of the remaining M sub-sets or to-be-processed pilot sequence sub-sets are non-orthogonal to each other, thus allowing to serve larger numbers of simultaneous connections in their respective user communication device groups by means of overloading their available resources. This overloading causes contamination (interference) among the pilot sequences. However this contamination can be maintained within a controlled level by proper tuning of the scheme parameters.

Different degrees of overloading can be used in user communication device groups 32_1, 32_2, 32_M+1 that have possibly different service requirements.

The M+1 pilot sequence sub-sets 311_1, 311_2, ..., 311_M+1 are additionally orthogonal to each other by design, so that there is no inter-group pilot contamination. This means that overloading in the M non-orthogonal sub-sets 311_2, ..., 311_M+1 does not affect channel estimation quality for user communication devices in the first orthogonal group 311_1.

Further, the present invention also provides a method to perform channel estimation based on this pilot sequence design.

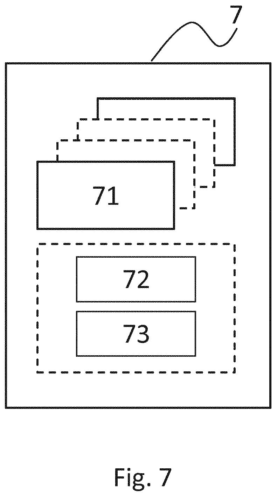

Fig. 7 shows an exemplary arrangement of a general channel estimator 7 according to an embodiment of the present invention. The channel estimator 7 is arranged to execute channel estimation as described herein. Fig. 7 supplements the embodiments described herein. It has to be pointed out that one or more, i.e. any one of the features of the embodiment of Fig. 7 are combinable with one or more, i.e. any one of the embodiments described herein.

According to the present embodiment, the channel estimator 7 comprises a transmitting entity 72, configured to execute transmission of data, and a receiving entity 73, configured to execute reception of data. According to an embodiment, the transmitting entity 72 and the receiving entity 73 are provided as one entity (e.g., transceiver), as indicated in Fig. 7 by the box with dashed lines. Thus, any one of the transmission steps, which is described herein as being executed by the channel estimator 7, is particularly executed by the transmitting entity 72. Any one of the reception steps, which is described herein as being executed by the channel estimator 7, is particularly executed by the receiving entity 73.

Further, the channel estimator 7 comprises one or more processing entities 71 configured to execute different processing steps, except for the transmission and reception of data, which are executed accordingly by the transmitting entity 72 and the receiving entity 73. Thus, any one of the steps, which is described herein as being executed by the channel estimator 7 and which does not refer to data transmission or reception, is particularly executed by at least one of the one or more processing entities 71.

In has to be noted, that the presence of the transmitting entity 72, receiving entity 73 and/or transceiver in the pilot sequence generator 7 in the channel estimator 7 is optional. Their presence is implementation-specific and depends on the environment of the channel estimator 7 and/or its further functions in a particular implementation of the channel estimator 7.

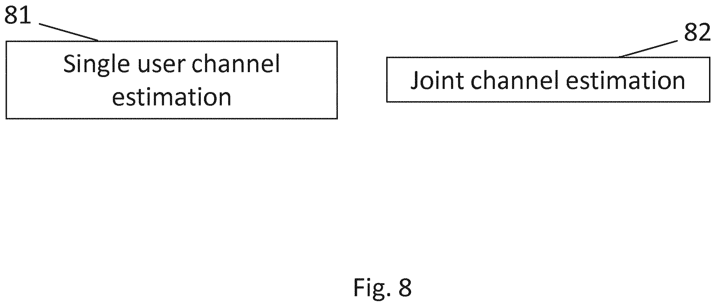

Fig. 8 shows two alternative steps 81, 82 executed by the channel estimator 7 according to an embodiment of the present invention. Said alternative steps 81, 82 are particularly executed by the channel estimator 7 to estimate a channel of a user communication device 322_1, ..., 322_z to which a pilot sequence of a processed non-orthogonal pilot sequence sub-set 311_2 of the M processed non-orthogonal pilot sequence sub-sets has been assigned. Fig. 8 supplements the embodiments described herein. It has to be pointed out that one or more, i.e. any one of the features of the embodiment of Fig. 8 are combinable with one or more, i.e. any one of the embodiments described herein.

According to the first alternative step 81, the channel estimator 7 executes a single user channel estimation method by use of one or more signal samples received in response to a transmission of symbols of the pilot sequence of the processed non-orthogonal pilot sequence sub-set 311_2 and by use of a single column of the complex matrix 5, which has been used for generating the processed non-orthogonal pilot sequence sub-set 311_2 of the M processed non-orthogonal pilot sequence sub-sets, wherein the single column is a column of the complex matrix that has been used to generate the pilot sequence, and by use of the to-be-processed pilot sequence sub-set 311_2' of the pilot sequences, based on which the processed non-orthogonal pilot sequence sub-set 311_2 has been generated.

According to the second alternative step 82, the channel estimator 7 executes a joint channel estimation method by use of: the one or more signal samples, the complex matrix 5, and the to-be-processed pilot sequence sub-set 311_2'.

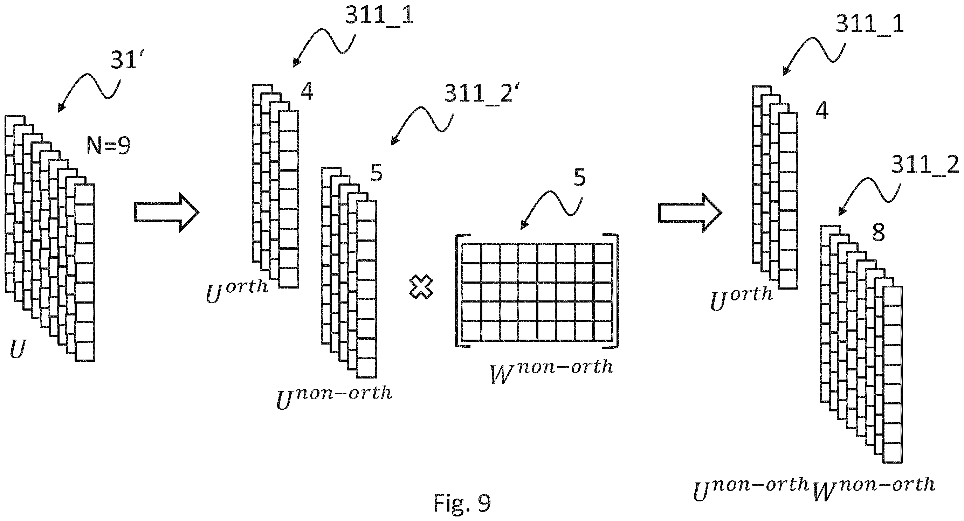

Fig. 9 shows a generation of user communication device specific pilot sequences 311_1, 311_2 from orthogonal cover codes (OCCs) 31' according to an embodiment of the present invention, wherein the number of user communication device specific pilot sequences 311_1, 311_2 is larger than the number of OCCs 31'. Fig. 9 supplements the embodiments described herein. It has to be pointed out that one or more, i.e. any one of the features of the embodiment of Fig. 9 are combinable with one or more, i.e. any one of the embodiments described herein.

In the embodiment of Fig. 9, the matrix **U** corresponding to the initial pilot sequence set 31' is exemplary any $N \times N$ orthogonal (OCC) matrix, e.g. Walsh-Hadamard or Discrete Fourier Transform (DFT) matrices, wherein N is a positive integer that is greater than or equal to 2. According to the exemplary embodiment of Fig. 9 K = 12 pilot sequences are generated starting from N = 9 OCC sequences by setting $N^{orth}$ = 4, $N^{non-orth}$ = 5 and $K^{non-orth}$ = 8. It has to be noted that numbers used in the embodiment of Fig. 9 are exemplary and do not limit the present invention. In the embodiment of Fig. 9, the columns of the complex matrix **W**$^{non-orth}$ 5 are any 8 points ($K^{non-orth}$ = 8) on a 5-dimensional ($N^{non-orth}$ = 5) complex sphere of radius 1. Particularly, the columns of the complex matrix **W**$^{non-orth}$ 5 are chosen such that their minimal pairwise angle is as large as possible.

When the pilot sequence construction of Fig. 9 is applied, any conventional channel estimation method is usable to estimate the channels of user communication devices 321_1, ..., 321_k from the "orthogonal" group 32_1 based on the pilot sequences $\mathbf{u}_1^{orth} \ldots \mathbf{u}_{N^{orth}}^{orth}$, where $\mathbf{u}_i^{orth}$ for i = 1 ... $N^{orth}$ designates the i-th column of the matrix **U**$^{orth}$ corresponding to the non-processed pilot sequence sub-set 311_1. As for the "non-orthogonal" user communication devices 322_1, ..., 322_z from the "non-orthogonal" group 32_2, their respective channels are estimatable, according to the present embodiment, by use of single-user channel estimation methods 81, such as single-user least squares (LS), that only use the column from the matrix **W**$^{non-orth}$ 5 corresponding to the user communication device 322_1, ..., 322_z. More precisely, let $\mathbf{p}_m$ denote the particular column of matrix **U**$^{non-orth} \times$ **W**$^{non-orth}$ (i.e. processed on-orthogonal pilot sequence sub-set 311_2) assigned as the pilot sequence of user device m and let $N_p$ be the length in symbols of this pilot sequence. Denote by $H_m$ the frequency-domain channel coefficient that is desired to be estimated at the BS 61 using the pilot $\mathbf{p}_m$. It has to be noted that $H_m$ does not depend on the resource element index n because OCC pilot sequences are typically chosen short enough to fit in a region of the resource grid where the channel is almost constant. Let $y_n$ designate the received sample at the BS corrupted by both thermal noise $z_n$ and interference from other "non-orthogonal" user communication devices pilot sequences. Then, we have

$$y_n = H_m p_{m,n} + \sum_{j \in \text{orth}} H_j p_{j,n} + \sum_{\substack{j \in \text{non-orth} \\ j \neq m}} H_j p_{j,n} + z_n,$$

where $p_{m,n}$ denotes the n-th element ($1 \leq n \leq N_p$) of the pilot sequence $\mathbf{p}_m$. Now, denote by **y** the vector of received pilot samples, i.e. **y** = $[y_1 \ldots Vm,]$. The single-user LS estimate, denoted as $\widehat{H}_m^{LS}$, of channel coefficient $H_m$ based on $\mathbf{p}_k$ and given the samples vector y writes as

$$\widehat{H}_k^{\mathrm{LS}} = \mathbf{p}_k^{\mathrm{H}}\mathbf{y} = \left(\sum_{i=1}^{N^{\mathrm{non-orth}}}\left[\mathbf{W}^{\mathrm{non-orth}}\right]_{i,k}\mathbf{u}_i^{\mathrm{non-orth}}\right)^{\mathrm{H}}\mathbf{y}.$$

Here, $[\mathbf{w}^{\mathrm{non-orth}}]_{i,m}$ is the m-th entry of the i-th column of the matrix $\mathbf{W}^{\mathrm{non-orth}}$ 5 and $\mathbf{U}^{\mathrm{non-orth}}$ is the i-th column of the matrix $\mathbf{U}^{\mathrm{non-orth}}$ 311_2'. The notation $\mathbf{M}^{\mathrm{H}}$, for some matrix $\mathbf{M}$, is used to designate the conjugate transpose of $\mathbf{M}$.

A better method for channel estimation for "non-orthogonal" pilot sequence subsets 311_2 is joint channel estimation 82, such as multiuser least squares (LS) or multiuser minimum mean square error (MMSE), in which all the columns of the matrix $\mathbf{W}^{\mathrm{non-orth}}$ 5 are used while estimating the channel responses of all the "non-orthogonal" user communication devices 322_1, ..., 322_z. More precisely, denote by $\mathbf{H}$ the vector of channel coefficients $[H_1 ... H_{K^{\mathrm{non-orth}}}]$ from the $K^{\mathrm{non-orth}}$ "non-orthogonal" user communication devices 322_1, ..., 322_z that we want to jointly estimate. The multiuser LS estimate of $\mathbf{H}$, denoted as $\widehat{\mathbf{H}}^{\mathrm{LS}}$, is given by

$$\widehat{\mathbf{H}}^{\mathrm{LS}} = \left(\mathbf{U}^{\mathrm{non-orth}}\mathbf{W}^{\mathrm{non-orth}}\right)^{-1}\mathbf{y}.$$

If the covariance matrix of the vector $\mathbf{H}$, denoted as $\mathbf{R}$, is known to the BS 62, then multiuser MMSE can be used. In this case channel estimate of the $K^{\mathrm{non-orth}}$ "non-orthogonal" user communication devices, denoted as $\widehat{\mathbf{H}}^{\mathrm{MMSE}}$, can be computed as follows:

$$\widehat{\mathbf{H}}^{\mathrm{MMSE}} =$$

$$\left(\mathbf{R}^{\frac{1}{2}}\right)^{\mathrm{H}}\left(\mathbf{U}^{\mathrm{non-orth}}\mathbf{W}^{\mathrm{non-orth}}\right)^{\mathrm{H}}\left(\sigma^2\mathbf{I} + \mathbf{U}^{\mathrm{non-orth}}\mathbf{W}^{\mathrm{non-orth}}\mathbf{R}\left(\mathbf{U}^{\mathrm{non-orth}}\mathbf{W}^{\mathrm{non-orth}}\right)^{\mathrm{H}}\right)^{-1}\mathbf{y}.$$

Here, $\mathbf{R}^{\frac{1}{2}}$ designates the square root of the covariance matrix $\mathbf{R}$ and $\sigma^2$ designates the variance of the additive noise $z_n$.

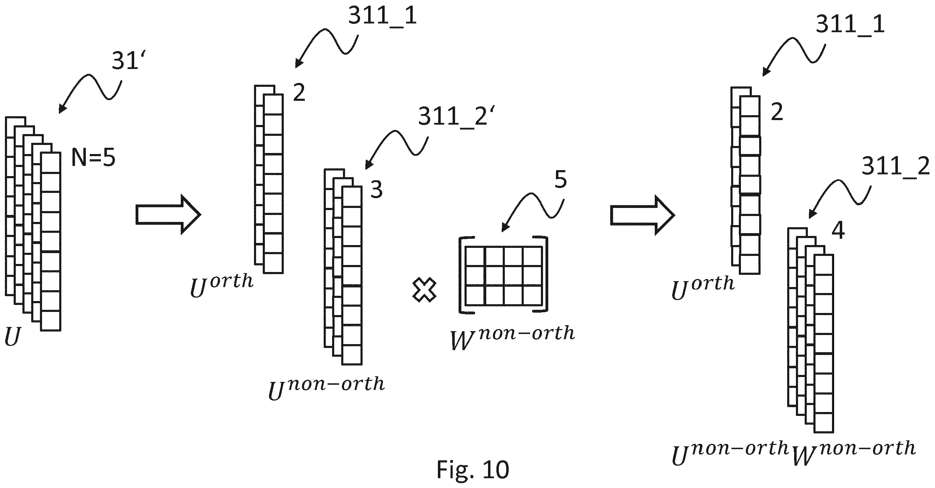

Fig. 10 shows a generation of user communication device specific pilot sequences 311_1, 311_2 from cyclic shift (CS) sequences 31' according to an embodiment of the present invention, wherein the number of user communication device specific pilot sequences 311_1, 311_2 is larger than the number of CS sequences 31'. Fig. 10 supplements the embodiments described herein. It has to be pointed out that one or more, i.e. any one of the features of the embodiment of Fig. 10 are combinable with one or more, i.e. any one of the embodiments described herein.

In the embodiment of Fig. 10, the matrix $\mathbf{U}$ 31' used as the basis in our pilot construction is selected as the rectangular matrix whose columns are $N$ CS sequences constructed from the same base sequence. Figure 10 shows an example of how the proposed method can be used to construct $K = 6$ user-specific pilots starting from $N = 5$ CS sequences by seting $N^{\mathrm{orth}} = 2$, $N^{\mathrm{non-orth}} = 3$ and $K^{\mathrm{non-orth}} = 4$, It has to be noted that numbers used in the embodiment of Fig. 9 are exemplary and do not limit the present invention. In the embodiment of Fig. 10, the matrix $\mathbf{W}^{\mathrm{non-orth}}$ 5 is exemplary selected by setting its columns to be any 4 points ($K^{\mathrm{non-orth}} = 4$) on a 3-dimensional complex sphere ($N^{\mathrm{non-ortn}} = 3$) of radius 1 chosen such that their minimal pairwise angle that is as large as possible.

Any conventional CS-based channel estimation method can be used to estimate the channels of user communication devices 321_1, ..., 321_k from the "orthogonal" group 32_1 based on the pilot sequences $\mathbf{u}_1^{\mathrm{orth}} ... \mathbf{u}_{N^{\mathrm{orth}}}^{\mathrm{orth}}$. As for the "non-orthogonal" group 32_2, the shifted channel impulse responses of the "non-orthogonal" user communication devices 322_1, ..., 322_z will still be separable from the impulse responses of the channels of the "orthogonal" user communication devices 321_1, ..., 321_k. However, since each one of the pilot sequences of the "non-orthogonal" user communication devices 322_1, ..., 322_z is a linear combination of multiple CS sequences, their respective channel impulse responses will no longer be separable from each other by time domain windowing. Fortunately, the columns of the complex matrix $\mathbf{W}^{\mathrm{non-orth}}$ 5 can be used to distinguish between the channels of "non-orthogonal" the "non-orthogonal" user communication devices 322_1, ..., 322_z by means of coherently combining on a sample basis the $N^{\mathrm{non-orth}}$ shifted versions of each "non-orthogonal" channel impulse response using the corresponding column of the complex matrix $\mathbf{W}^{\mathrm{non-orth}}$ 5. More precisely, let $\mathbf{p}_m$ denote the particular column of matrix $\mathbf{U}^{\mathrm{non-orth}} \times \mathbf{W}^{\mathrm{non-orth}}$ (i.e. processed non-orthogonal pilot sequence sub-set 311_2) assigned as the pilot sequence of user communication device m and let $N_p$ be the length in symbols of this pilot. Note that by construction:

$$\mathbf{p}_m = \sum_{i=1}^{N^{\mathrm{non-orth}}} \left[\mathbf{W}^{\mathrm{non-orth}}\right]_{i,m} \mathbf{u}_i^{\mathrm{non-orth}}.$$

Here, $[\mathbf{w}^{\mathrm{non-orth}}]_{i,m}$ is the m-th entry of the i-th column of the matrix $\mathbf{W}^{\mathrm{non-orth}}$ 5 and $\mathbf{u}_i^{\mathrm{non-orth}}$ is the *i*-th column of the matrix $\mathbf{U}^{\mathrm{non-orth}}$ (i.e. to-be-processed pilot sequence sub-set 311_2'). Denote by $H_{m,n}$ the frequency-domain channel coefficient at the position of the subcarrier n that is desired to be estimated at the BS 62 using the pilot $\mathbf{p}_m$ and let $y_n$ designate the received sample at the BS 62 corrupted by both thermal noise $z_n$ and interference from other non-orthogonal user communication device 322_1, ..., 322_z pilot sequences. Then $y_n$ writes as

$$y_n = H_{m,n}p_{m,n} + \sum_{j \in \mathrm{orth}} H_{j,n}p_{j,n} + \sum_{\substack{j \in \mathrm{non-orth} \\ j \neq m}} H_{j,n}p_{j,n} + z_n,$$

where $p_{m,n}$ denotes the n-th element ($1 \leq n \leq N_p$) of the pilot sequence $\mathbf{p}_m$. At first the least-squares (LS) estimate of $H_{m,n}$ (denoted as $\hat{H}_{m,n}$) is computed based on $p_{m,n}$ given the sample $y_{m,n}$ as

$$\hat{H}_{m,n}^{\mathrm{LS}} = y_{m,n}/p_{m,n}.$$

Then, a $N_p$-point inverse discrete Fourier transform (IDFT) is applied on the samples $\{\hat{H}_{m,n}\}_{1 \leq n \leq N_p}$. Due to the $N^{\mathrm{non-ortn}}$ CS sequences $\mathbf{u}_i^{\mathrm{non-orth}}$ in the definition of $\mathbf{p}_m$, the above IDFT operation will result in $N^{\mathrm{non-orth}}$ shifted versions of the estimated channel impulse response $\{\hat{h}_{m,i,t}\}_{1 \leq i \leq N\mathrm{non-orth}, 1 \leq t \leq L}$ of "non-orthogonal" user communication device m (as shown in Fig. 10 in the case where $N^{\mathrm{non-orth}} = 3$) where L is the length of the channel impulse response. These $N^{\mathrm{non-orth}}$ shifted versions are respectively weighted with the coefficients $\{[\mathbf{w}^{\mathrm{non-orth}}]_{i,m}\}_{1 \leq i \leq N\mathrm{non-orth}}$ and are corrupted by both thermal noise and interference. All of the interference from the "orthogonal" user communication devices 321_1, ..., 321_k and much of this noise can be mitigated by applying a time-domain window, e.g., rectangular window, $\{w_{i,t}\}_{1 \leq i \leq N\mathrm{non-orth}, 1 \leq t \leq L}$ to each shifted version to cancel noise samples from outside the interval covered by the L samples of the channel impulse resonse. To mitigate the effect of interference from the remaining "non-orthogonal" user communication devices 322_1, ..., 322_z, combining operation is executed, which gives the time-domain channel estimate $\hat{h}_{m,t}$ given by

$$\hat{h}_{m,t} = \sum_{i=1}^{N^{\mathrm{non-orth}}} \left[\mathbf{W}^{\mathrm{non-orth}}\right]_{i,m}^{*} w_{i,t} \hat{h}_{m,i,t}.$$

Finally, the final frequency domain channel estimates, denoted as $\{\tilde{H}_{m,n}\}_{1 \leq n \leq N_p}$ is obtainable as the discrete Fourier transform (DFT) of the time-domain estimates $\{\hat{h}_{m,t}\}_{1 \leq t \leq L}$.

Thus, the present invention relates to generation of pilot sequences for uplink and/or for downlink transmission. For this purpose, a pilot sequence set 31 comprising M+1 pilot sequence sub-sets 311_1, 311_2, ..., 311_M+1 is generated, M being positive integer that is equal to or greater than one (i.e. M≥1), each pilot sequence sub-set 311_1, 311_2, ..., 311_M+1 of the M+1 pilot sequence sub-sets 311_1, 311_2, ..., 311_M+1 being orthogonal or at least partially orthogonal to each further pilot sequence sub-set 311_1, 311_2, ..., 311_M+1 of the M+1 pilot sequence sub-sets 311_1, 311_2, ..., 311_M+1. The M+1 pilot sequence sub-sets 311_1, 311_2, ..., 311_M+1 can have different sizes corresponding to different desired degrees of pilot symbol time/frequency resource overloading and/or different desired degrees of pilot overhead reduction. The M+1 pilot sequence sub-sets 311_1, 311_2, ..., 311_M+1 are assigned to M+1 groups 32_1, 32_2, 32_M+1 of user communication devices, wherein each pilot sequence sub-set 311_1, 311_2, ..., 311_M+1 is assigned to one group 32_1, 32_2, ..., 32_M+1 of user communication devices, wherein each group 32_1, 32_2, ..., 32_M+1 of user communication devices comprises one or more user communication devices, and wherein, by the assignment, the one or more user communication devices of each group 32_1, 32 2, ..., 32_M+1 of user communication devices are configured to use, for the uplink and/or downlink transmission, pilot sequences of the pilot sequence sub-set 311_1, 311_2, ..., 311_M+1 assigned to the respective group 32_1, 32_2, ..., 32_M+1 of user communication devices. Additionally, the present invention relates to corresponding channel estimation.

As already discussed, some of the advantages achieved by the present invention comprise at least one of the following: allowing the BS 62 to communicate simultaneously with large numbers of connected user communication devices 321_1, ..., 321_k, 322_1, ..., 32_z by enabling the simultaneous transmission of large numbers of user communication device specific pilot sequences; increasing system throughput by reducing the average pilot overhead needed to communicate with the active user communication devices 321_1, ..., 321_k, 322_1, ..., 32_z in the system; achieving the best possible channel estimation quality for user communication devices 321_1, ..., 321_k, 322_1, ..., 32_z who need it, e.g., broadband user communication devices 321_1, ..., 321_k, 322_1, ..., 32_z.

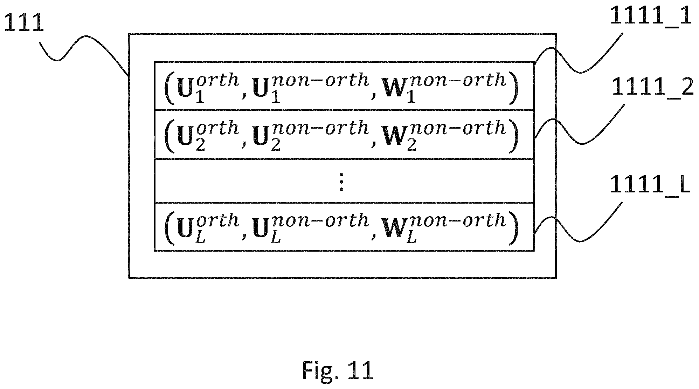

Fig. 11 shows a plurality 111 of *L* look-up tables 1111_1, 1111_2, ..., 1111_L, where *L* is a strictly positive integer, i.e. L>1. Each one of the L look-up tables 1111_1, 1111_2, ..., 1111_L is arranged to store a plurality of pilot sequences, according to an embodiment of the present invention.

The first look-up table 1111_1 comprises a set of $N_1^{orth}$ orthogonal sequences stored in the matrix $\mathbf{U}_1^{orth}$, another set of $N_1^{non-orth}$ orthogonal sequences stored in the matrix $\mathbf{U}_1^{non-orth}$ and $K_1^{non-orth}$ coefficient sequences stored in the matrix $\mathbf{W}_1^{non-orth}$.

The second look-up table 1111_2 comprises a set of $N_2^{orth}$ orthogonal sequences stored in the matrix $\mathbf{U}_2^{orth}$, another set of $N_2^{non-orth}$ orthogonal sequences stored in the matrix $\mathbf{U}_2^{non-orth}$ and $K_2^{non-orth}$ coefficient sequences stored in the matrix $\mathbf{W}_2^{non-orth}$.

The L-th look-up table 1111_L comprises a set of $N_L^{orth}$ orthogonal sequences stored in the matrix $\mathbf{U}_L^{orth}$, another set of $N_L^{non-orth}$ orthogonal sequences stored in the matrix $\mathbf{U}_L^{non-orth}$ and $K_L^{non-orth}$ coefficient sequences stored in the matrix $\mathbf{W}_L^{non-orth}$.

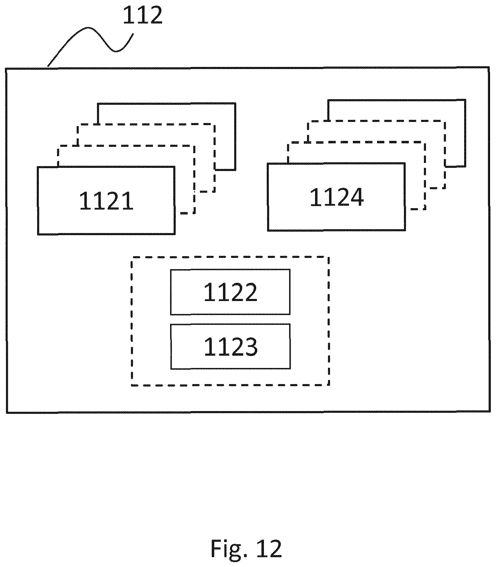

Fig. 12 shows an exemplary arrangement of a user communication device 112 according to an embodiment of the present invention. The user communication device 112 is arranged to use one or more pilot sequences, generated by the pilot sequence generator 1 for uplink and/or for downlink transmissions. The user communication device 112 is an exemplary representative of any of the above mentioned user communication devices 321_1, ..., 321_k, 322_1, ..., 32_z.

According to the present embodiment, the user communication device 112 comprises a transmitting entity 1122, configured to execute transmission of data and pilot symbols, and a receiving entity 1123, configured to execute reception of data and of pilot symbols. According to an embodiment, the transmitting entity 1122 and the receiving entity 1123 are provided as one entity (e.g., transceiver), as indicated in Fig. 12 by the box with dashed lines. Thus, any one of the transmission steps, which is described herein as being executed by a user communication device 112, is particularly executed by the transmitting entity 1122. Any one of the reception steps, which is described herein as being executed by a user communication device 112, is particularly executed by the receiving entity 1123. For example, the receiving entity is configured to receive instructions from the pilot sequence generator 1.

Further, the user communication device 112 comprises one or more data storing entities 1124 configured to store data. For example, at least one of the one or more storing entities 1124 is configured to store a plurality 111 of look-up tables 1111_1, 1111_2, ..., 1111_L. As stated above, in each look-up table 1111_1, 1111_2, ..., 1111_L of the plurality 111 of look-up tables 1111_1, 1111_2, ..., 1111_L a plurality of pilot sequences is stored, wherein the plurality of pilot sequences is generated by the pilot sequence generator 1. In case of presence of more than one look-up table 1111_1, 1111_2, ..., 1111_L in the one or more storing entities 1124, a first plurality of pilot sequences of a first look-up table 1111_1 is generated by applying a first M value, which is different from a second M value used for generating a second plurality of pilot sequences of a second look-up table 1111_2, ..., 111 1_L of the plurality of look-up tables 111, and/or by applying a first complex matrix $\mathbf{W}_1^{non-orth}$, which is different from a second complex matrix $\mathbf{W}_2^{non-orth}$ used for generating the second plurality of pilot sequences of the second look-up table 1111_2, ..., 1111_L. Thus, the plurality 111 of look-up tables 1111_1, 1111_2, ..., 1111_L comprises look-up tables 1111_1, 1111_2, ..., 1111_L that differ from each other with respect to the M value and/or with respect to the complex matrix $\mathbf{W}^{non-orth}$.

The user communication device 112 comprises also one or more processing entities 1121 configured to execute different processing steps, except for the transmission and reception of data or pilot symbols, which are executed accordingly by the transmitting entity 1122 and the receiving entity 1123. Thus, any one of the steps, which is executed by the user communication device 112 and which does not refer to data or pilot transmission, reception or storage, is particularly executed by at least one of the one or more processing entities 1121.

Particularly, according to an embodiment, the user communication device 112 (particularly, the receiving entity 1123 of the user communication device 112) is configured to receive, for example, a signaling message comprising one or more instructions from the pilot sequence generator 1 and to pass it to the processing entity 1121 which interprets the signaling message to extract the instructions incorporated in it. The instructions and thus the signaling message comprise an index of a look-up table 1111_1, 1111_2, ..., 1111_L, from the plurality 111 of $L$ look-up tables 1111_1, 1111_2, ..., 111 1_L, storing a plurality of pilot sequences, and an index of a pilot sequence of the look-up table 1111_1, 1111_2, ..., 1111_L to be used by the user communication device 112 for uplink pilot transmission and/or downlink channel estimation. For instance, uplink pilot transmission is executed by the transmitting entity 1122 of the user communication device 112 which transmits the symbols of the pilot sequence selected by at least one of the one or more processing entities 1121 based on the signaling message received by the receiving entity 1123.

The invention has been described in conjunction with various embodiments herein. However, other variations to the enclosed embodiments can be understood and effected by those skilled in the art and practicing the claimed invention, from a study of the drawings, the disclosure and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

**Claims**

1. A pilot sequence generator (1) arranged to generate pilot sequences for an uplink and/or for a downlink transmission, wherein the pilot sequence generator is configured to:

   - generate (21) a pilot sequence set comprising M+1 pilot sequence sub-sets, wherein M is a positive integer that is equal to or greater than one, wherein the pilot sequence generator (1) is configured to generate the pilot sequence set comprising the M+1 pilot sequence sub-sets by executing the following:
   - dividing (41) an initial pilot sequence set, comprising orthogonal pilot sequences, in a non-processed pilot sequence sub-set and M to-be-processed pilot sequence sub-sets; and
   - generating (42) M processed non-orthogonal pilot sequence sub-sets, wherein a processing unit (11) is configured, for each to-be-processed pilot sequence sub-set of the M to-be-processed pilot sequence sub-sets, to generate a processed non-orthogonal pilot sequence sub-set by multiplying a to-be-processed pilot sequence sub-set matrix, comprising pilot sequences of the respective to-be-processed pilot sequence sub-set as columns, with a complex matrix, wherein columns of matrix resulting from the multiplication represent the respective processed non-orthogonal pilot sequence sub-set; the M+1 pilot sequence sub-sets comprise the non-processed pilot sequence sub-set and the M processed non-orthogonal pilot sequence sub-sets, wherein the complex matrix is a $N^{non-orth} \times K^{non-orth}$ matrix, $N^{non-orth} < K^{non-orth}$ , and columns of the complex matrix are any $K^{non-orth}$ points on a $N^{non-orth}$-dimensional complex sphere of radius 1 with a minimal pairwise angle that is as large as possible, wherein the pilot sequences of the respective non-orthogonal pilot sequence sub-set are not orthogonal to each other, wherein each non-orthogonal pilot sequence sub-set of the M non-orthogonal pilot sequence sub-sets is orthogonal to each other non-orthogonal pilot sequence sub-set of the M non-orthogonal pilot sequence sub-sets;
   - assign (22) the M+1 pilot sequence sub-sets to M+1 groups of user communication devices, wherein each pilot sequence sub-set of the M+1 pilot sequence sub-sets is assigned to one group of user communication devices, wherein each group of user communication devices comprises one or more user communication devices, and wherein, by the assignment, the one or more user communication devices of each group of user communication devices of the M+1 groups of user communication devices are configured to use, for the uplink and/or for the downlink transmission, pilot sequences of the pilot sequence sub-set assigned to the respective group of user communication devices.

2. The pilot sequence generator according to claim 1, wherein the pilot sequence generator is configured to execute the assignment based on criteria including at least one of the following: user communication device service requirements, user communication device channel conditions, including channel statistics, user communication device position within the cell and/or user communication device distance to a serving base station.

3. The pilot sequence generator according to any one of the preceding claims, wherein the assigning (22) comprises, for each pilot sequence sub-set of the M+1 pilot sequence sub-sets, assigning pilot sequences of the pilot sequence sub-set to the one or more user communication devices of the group of user communication devices, which is assigned to the pilot sequence sub-set.

4. The pilot sequence generator according to claim 1, wherein the non-processed pilot sequence sub-set comprises at least one pilot sequence, and/or wherein each to-be-processed pilot sequence sub-set of the M to-be-processed pilot sequence sub-sets comprises at least two pilot sequences.

5. The pilot sequence generator according to claim 1 or 4, wherein a first to-be-processed pilot sequence sub-set of the M to-be-processed pilot sequence sub-sets has a number of pilot sequences that is different from a number of pilot sequences of a second to-be-processed pilot sequence sub-set of the M to-be-processed pilot sequence sub-sets, and/or wherein a first processed non-orthogonal pilot sequence sub-set of the M processed non-orthogonal pilot sequence sub-sets has a number of pilot sequences that is different from a number of pilot sequences of a second processed non-orthogonal pilot sequence sub-set of the M processed non-orthogonal pilot sequence sub-sets.

6. The pilot sequence generator according to any one of claims 1, 4 to 5, wherein, the non-processed pilot sequence sub-set is empty and all the generated pilot sequences are in the M processed non-orthogonal pilot sequence sub-sets.

7. The pilot sequence generator according to any one of claims 1, 4 to 6, wherein, the non-processed pilot sequence sub-set comprises at least two pilot sequences, and wherein each one of the pilot sequences of the non-processed pilot sequence sub-set is orthogonal to each further pilot sequence of the non-processed pilot sequence sub-set.

8. The pilot sequence generator according to any one of claims 1, 4 to 7, wherein the number of rows of the complex matrix is equal to the number of columns of the to-be-processed pilot sequence sub-set matrix, comprising pilot sequences of the respective to-be-processed pilot sequence sub-set as columns, and wherein a number of columns of the complex matrix is greater than the number of rows of the complex matrix.

9. The pilot sequence generator according to any one of claims 1, 4 to 8, wherein the pilot sequence generator is configured to execute said assigning by: assigning pilot sequences of the non-processed pilot sequence sub-set to a first group of user communication devices of the M+1 groups of user communication devices; and by assigning pilot sequences of each processed non-orthogonal pilot sequence sub-set of the M processed non-orthogonal pilot sequence sub-sets to a corresponding further group of user communication devices of the M+1 groups of user communication devices.

10. The pilot sequence generator according to any one of claims 1 to 9, wherein the pilot sequence generator is configured to transmit a signaling message to a user communication device of a group of user communication devices of the M+1 groups of user communication devices, wherein the signaling message comprises an index of a look-up table, storing a plurality of pilot sequences, and an index of a pilot sequence of the look-up table to be used by the user communication device.

11. A method arranged to generate pilot sequences for an uplink and/or for a downlink transmission wherein the method comprises the following steps of:

- generating (21) a pilot sequence set comprising M+1 pilot sequence sub-sets, wherein M is a positive integer that is equal to or greater than one, wherein the generating (21) the pilot sequence set comprising the M+1 pilot sequence sub-sets comprises the following sub-steps:
- dividing (41) an initial pilot sequence set, comprising orthogonal pilot sequences, in a non-processed pilot sequence sub-set and M to-be-processed pilot sequence sub-sets; and
- generating (42) M processed non-orthogonal pilot sequence sub-sets, wherein a processing unit (11) is configured, for each to-be-processed pilot sequence sub-set of the M to-be-processed pilot sequence sub-sets, to generate a processed non-orthogonal pilot sequence sub-set by multiplying a to-be-processed pilot sequence sub-set matrix, comprising pilot sequences of the respective to-be-processed pilot sequence sub-set as columns, with a complex matrix, wherein columns of matrix resulting from the multiplication represent the respective processed non-orthogonal pilot sequence sub-set; the M+1 pilot sequence sub-sets comprise the non-processed pilot sequence sub-set and the M processed non-orthogonal pilot sequence sub-sets, wherein the complex matrix is a $N^{non\text{-}orth} \times K^{non\text{-}orth}$ matrix, $N^{non\text{-}orth} < K^{non\text{-}orth}$, and columns of the complex matrix are any $K^{non\text{-}orth}$ points on a $N^{non\text{-}orth}$-dimensional complex sphere of radius 1 with a minimal pairwise angle that is as large as possible, wherein the pilot sequences of the respective non-orthogonal pilot sequence sub-set are not orthogonal to each other, wherein each non-orthogonal pilot sequence sub-set of the M non-orthogonal pilot sequence sub-sets is orthogonal to each other non-orthogonal pilot sequence sub-set of the M non-orthogonal pilot sequence sub-sets;

- assigning (22) the M+1 pilot sequence sub-sets to M+1 groups of user communication devices, wherein each pilot sequence sub-set of the M+1 pilot sequence sub-sets is assigned to one group of user communication devices, wherein each group of user communication devices comprises one or more user communication devices, and wherein, by the assignment, the one or more user communication devices of each group of user communication devices of the M+1 groups of user communication devices are configured to use, for the uplink and/or for the downlink transmission, pilot sequences of the pilot sequence sub-set assigned to the respective group of user communication devices.

**12.** A channel estimator (7) arranged to execute a channel estimation with regard to pilot sequences generated by a pilot sequence generator (1) according to any one of claims 1, 4 to 10, wherein the channel estimator is configured to estimate a channel of a user communication device, to which a pilot sequence of a processed non-orthogonal pilot sequence sub-set of the M processed non-orthogonal pilot sequence sub-sets has been assigned, by executing one of the following:

- a single user channel estimation method (81) by use of one or more signal samples received in response to a transmission of symbols of the pilot sequence, and by use of a single column of the complex matrix, which has been used for generating the processed non-orthogonal pilot sequence sub-set of the M processed non-orthogonal pilot sequence sub-sets, and by use of the to-be-processed pilot sequence sub-set of the pilot sequences, based on which the processed non-orthogonal pilot sequence sub-set has been generated;
- a joint channel estimation method (82) by use of: the one or more signal samples, the complex matrix, and the to-be-processed pilot sequence sub-set.

**13.** A method arranged to execute a channel estimation with regard to pilot sequences generated by a pilot sequence generator (1) according to any one of claims 1, 4 to 10, wherein the method comprises an estimation of a channel of a user communication device, to which a pilot sequence of a processed non-orthogonal pilot sequence sub-set of the M processed non-orthogonal pilot sequence sub-sets has been assigned, said estimation comprising one of the following:

- execution of a single user channel estimation method (81) by use of one or more signal samples received in response to a transmission of symbols of the pilot sequence, and by use of a single column of the complex matrix, which has been used for generating the processed non-orthogonal pilot sequence sub-set of the M processed non-orthogonal pilot sequence sub-sets, and by use of the to-be-processed pilot sequence sub-set of the pilot sequences, based on which the processed non-orthogonal pilot sequence sub-set has been generated;
- execution of a joint channel estimation method (82) by use of: the one or more signal samples, the complex matrix, and the to-be-processed pilot sequence sub-set.

**Patentansprüche**

**1.** Pilotsequenzgenerator (1), eingerichtet zum Erzeugen von Pilotsequenzen für eine Uplink- und/oder für eine Downlink-Übertragung, wobei der Pilotsequenzgenerator zu Folgendem ausgelegt ist:

- Erzeugen (21) einer Pilotsequenzmenge, die M+1 Pilotsequenzteilmengen umfasst, wobei M eine positive ganze Zahl ist, die gleich oder größer als eins ist, wobei der Pilotsequenzgenerator (1) ausgelegt ist zum Erzeugen der Pilotsequenzmenge, die die M+1 Pilotsequenzteilmengen umfasst, durch Ausführen von Folgendem:
- Aufteilen (41) einer Anfangspilotsequenzmenge, die orthogonale Pilotsequenzen umfasst, in eine nicht-verarbeitete Pilotsequenzteilmenge und M zu verarbeitende Pilotsequenzteilmengen; und
- Erzeugen (42) von M verarbeiteten nicht-orthogonalen Pilotsequenzteilmengen, wobei eine Verarbeitungseinheit (11) ausgelegt ist zum Erzeugen, für jede zu verarbeitende Pilotsequenzteilmenge der M zu verarbeitenden Pilotsequenzteilmengen, einer verarbeiteten nicht-orthogonalen Pilotsequenzteilmenge durch Multiplizieren einer zu verarbeitenden Pilotsequenzteilmengenmatrix, die Pilotsequenzen der jeweiligen zu verarbeitenden Pilotsequenzteilmenge als Spalten umfasst, mit einer komplexen Matrix, wobei Spalten einer aus der Multiplikation resultierenden Matrix die jeweilige verarbeitete nicht-orthogonale Pilotsequenzteilmenge darstellen; die M+1 Pilotsequenzteilmengen die nicht-verarbeitete Pilotsequenzteilmenge und die M verarbeiteten nicht-orthogonalen Pilotsequenzteilmengen umfassen, wobei die komplexe Matrix eine $N^{nicht\text{-}orth} \times$

$K^{nicht-orth}$-Matrix ist, $N^{nicht-orth} < K^{nicht-orth}$ gilt und Spalten der komplexen Matrix alle $K^{nicht-orth}$-Punkte auf einer $N^{nicht-orth}$-dimensionalen komplexen Sphäre mit einem Radius von 1 mit einem minimalen paarweisen Winkel, der so groß wie möglich ist, sind, wobei die Pilotsequenzen der jeweiligen nicht-orthogonalen Pilotsequenzteilmenge nicht orthogonal zueinander sind, wobei jede nicht-orthogonale Pilotsequenzteilmenge der M nicht-orthogonalen Pilotsequenzteilmengen orthogonal zu jeder anderen nicht-orthogonalen Pilotsequenzteilmenge der M nicht-orthogonalen Pilotsequenzteilmengen ist;

- Zuweisen (22) der M+1 Pilotsequenzteilmengen zu M+1 Gruppen von Benutzerkommunikationsvorrichtungen, wobei jede Pilotsequenzteilmenge der M+1 Pilotsequenzteilmengen einer Gruppe von Benutzerkommunikationsvorrichtungen zugewiesen wird, wobei jede Gruppe von Benutzerkommunikationsvorrichtungen eine oder mehrere Benutzerkommunikationsvorrichtungen umfasst und wobei die eine oder die mehreren Benutzerkommunikationsvorrichtungen jeder Gruppe von Benutzerkommunikationsvorrichtungen der M+1 Gruppen von Benutzerkommunikationsvorrichtungen durch die Zuweisung konfiguriert werden zum Verwenden, für die Uplink- und/oder für die Downlink-Übertragung, von Pilotsequenzen der der jeweiligen Gruppe von Benutzerkommunikationsvorrichtungen zugewiesenen Pilotsequenzteilmenge.

**2.** Pilotsequenzgenerator nach Anspruch 1, wobei der Pilotsequenzgenerator ausgelegt ist zum Ausführen der Zuweisung basierend auf Kriterien, die mindestens eines der Folgenden beinhalten: Benutzerkommunikationsvorrichtungsdienstanforderungen, Benutzerkommunikationsvorrichtungskanalbedingungen, darunter Kanalstatistiken, Benutzerkommunikationsvorrichtungsposition innerhalb der Zelle und/oder Benutzerkommunikationsvorrichtungsabstand zu einer bedienenden Basisstation.

**3.** Pilotsequenzgenerator nach einem der vorhergehenden Ansprüche, wobei das Zuweisen (22) Zuweisen, für jede Pilotsequenzteilmenge der M+1 Pilotsequenzteilmengen, von Pilotsequenzen der Pilotsequenzteilmenge zu der einen oder den mehreren Benutzerkommunikationsvorrichtungen der Gruppe von Benutzerkommunikationsvorrichtungen, die der Pilotsequenzteilmenge zugewiesen ist, umfasst.

**4.** Pilotsequenzgenerator nach Anspruch 1, wobei die nicht-verarbeitete Pilotsequenzteilmenge mindestens eine Pilotsequenz umfasst und/oder wobei jede zu verarbeitende Pilotsequenzteilmenge der M zu verarbeitenden Pilotsequenzteilmengen mindestens zwei Pilotsequenzen umfasst.

**5.** Pilotsequenzgenerator nach Anspruch 1 oder 4, wobei eine erste zu verarbeitende Pilotsequenzteilmenge der M zu verarbeitenden Pilotsequenzteilmengen eine Anzahl von Pilotsequenzen aufweist, die sich von einer Anzahl von Pilotsequenzen einer zweiten zu verarbeitenden Pilotsequenzteilmenge der M zu verarbeitenden Pilotsequenzteilmengen unterscheidet, und/oder wobei eine erste verarbeitete nicht-orthogonale Pilotsequenzteilmenge der M verarbeiteten nicht-orthogonalen Pilotsequenzteilmengen eine Anzahl von Pilotsequenzen aufweist, die sich von einer Anzahl von Pilotsequenzen einer zweiten verarbeiteten nicht-orthogonalen Pilotsequenzteilmenge der M verarbeiteten nicht-orthogonalen Pilotsequenzteilmengen unterscheidet.

**6.** Pilotsequenzgenerator nach einem der Ansprüche 1, 4 bis 5, wobei die nicht-verarbeitete Pilotsequenzteilmenge leer ist und sich alle erzeugten Pilotsequenzen in den M verarbeiteten nicht-orthogonalen Pilotsequenzteilmengen befinden.

**7.** Pilotsequenzgenerator nach einem der Ansprüche 1, 4 bis 6, wobei die nicht-verarbeitete Pilotsequenzteilmenge mindestens zwei Pilotsequenzen umfasst und wobei jede der Pilotsequenzen der nicht-verarbeiteten Pilotsequenzteilmenge orthogonal zu jeder weiteren Pilotsequenz der nicht-verarbeiteten Pilotsequenzteilmenge ist.

**8.** Pilotsequenzgenerator nach einem der Ansprüche 1, 4 bis 7, wobei die Anzahl von Zeilen der komplexen Matrix gleich der Anzahl von Spalten der Matrix der zu verarbeitenden Pilotsequenzteilmenge ist, die Pilotsequenzen der jeweiligen zu verarbeitenden Pilotsequenzteilmenge als Spalten umfasst, und wobei eine Anzahl von Spalten der komplexen Matrix größer als die Anzahl von Zeilen der komplexen Matrix ist.

**9.** Pilotsequenzgenerator nach einem der Ansprüche 1, 4 bis 8, wobei der Pilotsequenzgenerator ausgelegt ist zum Ausführen des Zuweisen durch: Zuweisen von Pilotsequenzen der nicht-verarbeiteten Pilotsequenzteilmenge zu einer ersten Gruppe von Benutzerkommunikationsvorrichtungen der M+1 Gruppen von Benutzerkommunikationsvorrichtungen; und durch Zuweisen von Pilotsequenzen jeder verarbeiteten nicht-orthogonalen Pilotsequenzteilmenge der M verarbeiteten nicht-orthogonalen Pilotsequenzteilmengen zu einer entsprechenden weiteren Gruppe von Benutzerkommunikationsvorrichtungen der M+1 Gruppen von Benutzerkommunikationsvorrichtungen.

**10.** Pilotsequenzgenerator nach einem der Ansprüche 1 bis 9, wobei der Pilotsequenzgenerator ausgelegt ist zum Übertragen einer Signalisierungsnachricht an eine Benutzerkommunikationsvorrichtung einer Gruppe von Benutzerkommunikationsvorrichtungen der M+1 Gruppen von Benutzerkommunikationsvorrichtungen, wobei die Signalisierungsnachricht einen Index einer Verweistabelle, die mehrere Pilotsequenzen speichert, und einen Index einer Pilotsequenz der Verweistabelle, die durch die Benutzerkommunikationsvorrichtung zu verwenden ist, umfasst.

**11.** Verfahren, ausgelegt zum Erzeugen von Pilotsequenzen für eine Uplink- und/oder für eine Downlink-Übertragung, wobei das Verfahren die folgenden Schritte umfasst:

- Erzeugen (21) einer Pilotsequenzmenge, die M+1 Pilotsequenzteilmengen umfasst, wobei M eine positive ganze Zahl ist, die gleich oder größer als eins ist, wobei das Erzeugen (21) der Pilotsequenzmenge, die die M+1 Pilotsequenzteilmengen umfasst, die folgenden Teilschritte umfasst:
- Aufteilen (41) einer Anfangspilotsequenzmenge, die orthogonale Pilotsequenzen umfasst, in eine nicht-verarbeitete Pilotsequenzteilmenge und M zu verarbeitende Pilotsequenzteilmengen; und
- Erzeugen (42) von M verarbeiteten nicht-orthogonalen Pilotsequenzteilmengen, wobei eine Verarbeitungseinheit (11) ausgelegt ist zum Erzeugen, für jede zu verarbeitende Pilotsequenzteilmenge der M zu verarbeitenden Pilotsequenzteilmengen, einer verarbeiteten nicht-orthogonalen Pilotsequenzteilmenge durch Multiplizieren einer zu verarbeitenden Pilotsequenzteilmengenmatrix, die Pilotsequenzen der jeweiligen zu verarbeitenden Pilotsequenzteilmenge als Spalten umfasst, mit einer komplexen Matrix, wobei Spalten einer aus der Multiplikation resultierenden Matrix die jeweilige verarbeitete nicht-orthogonale Pilotsequenzteilmenge darstellen; die M+1 Pilotsequenzteilmengen die nicht-verarbeitete Pilotsequenzteilmenge und die M verarbeiteten nicht-orthogonalen Pilotsequenzteilmengen umfassen, wobei die komplexe Matrix eine $N^{nicht-orth} \times K^{nicht-orth}$-Matrix ist, $N^{nicht-orth} < K^{nicht-orth}$ gilt und Spalten der komplexen Matrix alle $K^{nicht-orth}$-Punkte auf einer $N^{nicht-orth}$-dimensionalen komplexen Sphäre mit einem Radius von 1 mit einem minimalen paarweisen Winkel, der so groß wie möglich ist, sind, wobei die Pilotsequenzen der jeweiligen nicht-orthogonalen Pilotsequenzteilmenge nicht orthogonal zueinander sind, wobei jede nicht-orthogonale Pilotsequenzteilmenge der M nicht-orthogonalen Pilotsequenzteilmengen orthogonal zu jeder anderen nicht-orthogonalen Pilotsequenzteilmenge der M nicht-orthogonalen Pilotsequenzteilmengen ist;
- Zuweisen (22) der M+1 Pilotsequenzteilmengen zu M+1 Gruppen von Benutzerkommunikationsvorrichtungen, wobei jede Pilotsequenzteilmenge der M+1 Pilotsequenzteilmengen einer Gruppe von Benutzerkommunikationsvorrichtungen zugewiesen wird, wobei jede Gruppe von Benutzerkommunikationsvorrichtungen eine oder mehrere Benutzerkommunikationsvorrichtungen umfasst und wobei die eine oder die mehreren Benutzerkommunikationsvorrichtungen jeder Gruppe von Benutzerkommunikationsvorrichtungen der M+1 Gruppen von Benutzerkommunikationsvorrichtungen durch die Zuweisung konfiguriert werden zum Verwenden, für die Uplink- und/oder für die Downlink-Übertragung, von Pilotsequenzen der der jeweiligen Gruppe von Benutzerkommunikationsvorrichtungen zugewiesenen Pilotsequenzteilmenge.

**12.** Kanalschätzer (7), eingerichtet zum Ausführen einer Kanalschätzung bezüglich Pilotsequenzen, die durch einen Pilotsequenzgenerator (1) nach einem der Ansprüche 1, 4 bis 10, erzeugt werden, wobei der Kanalschätzer ausgelegt ist zum Schätzen eines Kanals einer Benutzerkommunikationsvorrichtung, der eine Pilotsequenz einer verarbeiteten nicht-orthogonalen Pilotsequenzteilmenge der M verarbeiteten nicht-orthogonalen Pilotsequenzteilmengen zugewiesen wurde, durch Ausführen eines der Folgenden:

- eines Einzelbenutzer-Kanalschätzungsverfahrens (81) unter Verwendung einer oder mehrerer Signalabtastungen, die als Reaktion auf eine Übertragung von Symbolen der Pilotsequenz empfangen werden, und unter Verwendung einer einzelnen Spalte der komplexen Matrix, die zum Erzeugen der verarbeiteten nicht-orthogonalen Pilotsequenzteilmenge der M verarbeiteten nicht-orthogonalen Pilotsequenzteilmengen verwendet wurde, und unter Verwendung der zu verarbeitenden Pilotsequenzteilmenge der Pilotsequenzen, auf deren Basis die verarbeitete nicht-orthogonale Pilotsequenzteilmenge erzeugt wurde;
- eines gemeinsamen Kanalschätzungsverfahrens (82) unter Verwendung: der einen oder der mehreren Signalabtastungen, der komplexen Matrix und der zu verarbeitenden Pilotsequenzteilmenge.

**13.** Verfahren, ausgelegt zum Ausführen einer Kanalschätzung bezüglich Pilotsequenzen, die durch einen Pilotsequenzgenerator (1) nach einem der Ansprüche 1, 4 bis 10, erzeugt werden, wobei das Verfahren eine Schätzung eines Kanals einer Benutzerkommunikationsvorrichtung, der eine Pilotsequenz einer verarbeiteten nicht-orthogonalen Pilotsequenzteilmenge der M verarbeiteten nicht-orthogonalen Pilotsequenzteilmengen zugewiesen wurde, umfasst, wobei die Schätzung eines der Folgenden umfasst:

- Ausführung eines Einzelbenutzer-Kanalschätzungsverfahrens (81) unter Verwendung einer oder mehrerer Signalabtastungen, die als Reaktion auf eine Übertragung von Symbolen der Pilotsequenz empfangen werden, und unter Verwendung einer einzelnen Spalte der komplexen Matrix, die zum Erzeugen der verarbeiteten nicht-orthogonalen Pilotsequenzteilmenge der M verarbeiteten nicht-orthogonalen Pilotsequenzteilmengen verwendet wurde, und unter Verwendung der zu verarbeitenden Pilotsequenzteilmenge der Pilotsequenzen, auf deren Basis die verarbeitete nicht-orthogonale Pilotsequenzteilmenge erzeugt wurde;

- Ausführung eines gemeinsamen Kanalschätzungsverfahrens (82) unter Verwendung: der einen oder der mehreren Signalabtastungen, der komplexen Matrix und der zu verarbeitenden Pilotsequenzteilmenge.

## Revendications

1. Générateur (1) de séquences pilotes destiné à générer des séquences pilotes pour une transmission de liaison montante et/ou de liaison descendante, le générateur de séquences pilotes étant configuré pour :

   - générer (21) un ensemble de séquences pilotes comportant M+1 sous-ensembles de séquences pilotes, M étant un entier positif supérieur ou égal à un, le générateur (1) de séquences pilotes étant configuré pour générer l'ensemble de séquences pilotes comportant les M+1 sous-ensembles de séquences pilotes en exécutant les actions suivantes :
   - diviser (41) un ensemble initial de séquences pilotes, comportant des séquences pilotes orthogonales, en un sous-ensemble de séquences pilotes non traité et M sous-ensembles de séquences pilotes à traiter ; et
   - générer (42) M sous-ensembles traités de séquences pilotes non orthogonales, une unité (11) de traitement étant configurée, pour chaque sous-ensemble de séquences pilotes à traiter parmi les M sous-ensembles de séquences pilotes à traiter, pour générer un sous-ensemble traité de séquences pilotes non orthogonales en multipliant une matrice de sous-ensemble de séquences pilotes à traiter, comportant des séquences pilotes du sous-ensemble respectif de séquences pilotes à traiter en tant que colonnes, avec une matrice complexe, des colonnes d'une matrice résultant de la multiplication représentant le sous-ensemble respectif traité de séquences pilotes non orthogonales ; les M+1 sous-ensembles de séquences pilotes comportant le sous-ensemble de séquences pilotes non traité et les M sous-ensembles traités de séquences pilotes non orthogonales, la matrice complexe étant une matrice $N^{non\text{-}orth} \times K^{non\text{-}orth}$, avec $N^{non\text{-}orth} < K^{non\text{-}orth}$, et des colonnes de la matrice complexe étant $K^{non\text{-}orth}$ points quelconques sur une sphère complexe en dimension $N^{non\text{-}orth}$ de rayon 1 présentant un angle minimal par paires qui est aussi grand que possible, les séquences pilotes du sous-ensemble respectif de séquences pilotes non orthogonales n'étant pas orthogonales entre elles, chaque sous-ensemble de séquences pilotes non orthogonales parmi les M sous-ensembles de séquences pilotes non orthogonales étant orthogonal à chaque autre sous-ensemble de séquences pilotes non orthogonales parmi les M sous-ensembles de séquences pilotes non orthogonales ;
   - affecter (22) les M+1 sous-ensembles de séquences pilotes à M+1 groupes de dispositifs de communication d'utilisateurs, chaque sous-ensemble de séquences pilotes parmi les M+1 sous-ensembles de séquences pilotes étant affecté à un seul groupe de dispositifs de communication d'utilisateurs, chaque groupe de dispositifs de communication d'utilisateurs comportant un ou plusieurs dispositifs de communication d'utilisateurs, et, du fait de l'affectation, le ou les dispositifs de communication d'utilisateurs de chaque groupe de dispositifs de communication d'utilisateurs parmi les M+1 groupes de dispositifs de communication d'utilisateurs étant configurés pour utiliser, pour la transmission de liaison montante et/ou de liaison descendante, des séquences pilotes du sous-ensemble de séquences pilotes affecté au groupe respectif de dispositifs de communication d'utilisateurs.

2. Générateur de séquences pilotes selon la revendication 1, le générateur de séquences pilotes étant configuré pour exécuter l'affectation sur la base de critères incluant au moins un de ceux qui suivent : exigences de service de dispositifs de communication d'utilisateurs, conditions de canaux de dispositifs de communication d'utilisateurs, y compris des statistiques de canal, position d'un dispositif de communication d'utilisateur à l'intérieur de la cellule et/ou distance du dispositif de communication d'utilisateur à une station de base de desserte.

3. Générateur de séquences pilotes selon l'une quelconque des revendications précédentes, l'affectation (22) comportant, pour chaque sous-ensemble de séquences pilotes parmi les M+1 sous-ensembles de séquences pilotes, l'affectation de séquences pilotes du sous-ensemble de séquences pilotes au(x) dispositif(s) de communication d'utilisateur(s) du groupe de dispositifs de communication d'utilisateurs, qui est affecté au sous-ensemble de séquences pilotes.

4. Générateur de séquences pilotes selon la revendication 1, le sous-ensemble de séquences pilotes non traité comportant au moins une séquence pilote, et/ou chaque sous-ensemble de séquences pilotes à traiter parmi les M sous-ensembles de séquences pilotes à traiter comportant au moins deux séquences pilotes.

5. Générateur de séquences pilotes selon la revendication 1 ou 4, un premier sous-ensemble de séquences pilotes à traiter parmi les M sous-ensembles de séquences pilotes à traiter présentant un nombre de séquences pilotes qui est différent d'un nombre de séquences pilotes d'un second sous-ensemble de séquences pilotes à traiter parmi les M sous-ensembles de séquences pilotes à traiter, et/ou un premier sous-ensemble traité de séquences pilotes non orthogonales parmi les M sous-ensembles traités de séquences pilotes non orthogonales présentant un nombre de séquences pilotes qui est différent d'un nombre de séquences pilotes d'un second sous-ensemble traité de séquences pilotes non orthogonales parmi les M sous-ensembles traités de séquences pilotes non orthogonales.

6. Générateur de séquences pilotes selon l'une quelconque des revendications 1, 4 à 5, le sous-ensemble de séquences pilotes non traité étant vide et toutes les séquences pilotes générées se trouvant dans les M sous-ensembles traités de séquences pilotes non orthogonales.

7. Générateur de séquences pilotes selon l'une quelconque des revendications 1, 4 à 6, le sous-ensemble de séquences pilotes non traité comportant au moins deux séquences pilotes, et chacune des séquences pilotes du sous-ensemble de séquences pilotes non traité étant orthogonale à chaque autre séquence pilote du sous-ensemble de séquences pilotes non traité.

8. Générateur de séquences pilotes selon l'une quelconque des revendications 1, 4 à 7, le nombre de lignes de la matrice complexe étant égal au nombre de colonnes de la matrice de sous-ensemble de séquences pilotes à traiter, comportant des séquences pilotes du sous-ensemble respectif de séquences pilotes à traiter en tant que colonnes, et un nombre de colonnes de la matrice complexe étant supérieur au nombre de lignes de la matrice complexe.

9. Générateur de séquences pilotes selon l'une quelconque des revendications 1, 4 à 8, le générateur de séquences pilotes étant configuré pour exécuter ladite affectation : en affectant des séquences pilotes du sous-ensemble de séquences pilotes non traité à un premier groupe de dispositifs de communication d'utilisateurs parmi les M+1 groupes de dispositifs de communication d'utilisateurs ; et en affectant des séquences pilotes de chaque sous-ensemble traité de séquences pilotes non orthogonales parmi les M sous-ensembles traités de séquences pilotes non orthogonales à un autre groupe correspondant de dispositifs de communication d'utilisateurs parmi les M+1 groupes de dispositifs de communication d'utilisateurs.

10. Générateur de séquences pilotes selon l'une quelconque des revendications 1 à 9, le générateur de séquences pilotes étant configuré pour transmettre un message de signalisation à un dispositif de communication d'utilisateur d'un groupe de dispositifs de communication d'utilisateurs parmi les M+1 groupes de dispositifs de communication d'utilisateurs, le message de signalisation comportant un indice d'une table de recherche, conservant une pluralité de séquences pilotes, et un indice d'une séquence pilote de la table de recherche à utiliser par le dispositif de communication d'utilisateur.

11. Procédé destiné à générer des séquences pilotes pour une transmission de liaison montante et/ou de liaison descendante, le procédé comportant les étapes suivantes consistant à :

- générer (21) un ensemble de séquences pilotes comportant M+1 sous-ensembles de séquences pilotes, M étant un entier positif supérieur ou égal à un, la génération (21) de l'ensemble de séquences pilotes comportant les M+1 sous-ensembles de séquences pilotes comportant les sous-étapes suivantes :
- diviser (41) un ensemble initial de séquences pilotes, comportant des séquences pilotes orthogonales, en un sous-ensemble de séquences pilotes non traité et M sous-ensembles de séquences pilotes à traiter ; et
- générer (42) M sous-ensembles traités de séquences pilotes non orthogonales, une unité (11) de traitement étant configurée, pour chaque sous-ensemble de séquences pilotes à traiter parmi les M sous-ensembles de séquences pilotes à traiter, pour générer un sous-ensemble traité de séquences pilotes non orthogonales en multipliant une matrice de sous-ensemble de séquences pilotes à traiter, comportant des séquences pilotes du sous-ensemble respectif de séquences pilotes à traiter en tant que colonnes, avec une matrice complexe, des colonnes d'une matrice résultant de la multiplication représentant le sous-ensemble respectif traité de séquences pilotes non orthogonales ; les M+1 sous-ensembles de séquences pilotes comportant le sous-ensemble de séquences pilotes non traité et les M sous-ensembles traités de séquences pilotes non orthogonales, la matrice complexe étant une matrice $N^{non-orth} \times K^{non-orth}$, avec $N^{non-orth} < K^{non-orth}$ et des colonnes de la matrice complexe

étant $K^{non\text{-}orth}$ points quelconques sur une sphère complexe en dimension $N^{non\text{-}orth}$ de rayon 1 présentant un angle minimal par paires qui est aussi grand que possible, les séquences pilotes du sous-ensemble respectif de séquences pilotes non orthogonales n'étant pas orthogonales entre elles, chaque sous-ensemble de séquences pilotes non orthogonales parmi les M sous-ensembles de séquences pilotes non orthogonales étant orthogonal à chaque autre sous-ensemble de séquences pilotes non orthogonales parmi les M sous-ensembles de séquences pilotes non orthogonales ;

- affecter (22) les M+1 sous-ensembles de séquences pilotes à M+1 groupes de dispositifs de communication d'utilisateurs, chaque sous-ensemble de séquences pilotes parmi les M+1 sous-ensembles de séquences pilotes étant affecté à un seul groupe de dispositifs de communication d'utilisateurs, chaque groupe de dispositifs de communication d'utilisateurs comportant un ou plusieurs dispositifs de communication d'utilisateurs, et, du fait de l'affectation, le ou les dispositifs de communication d'utilisateurs de chaque groupe de dispositifs de communication d'utilisateurs parmi les M+1 groupes de dispositifs de communication d'utilisateurs étant configurés pour utiliser, pour la transmission de liaison montante et/ou de liaison descendante, des séquences pilotes du sous-ensemble de séquences pilotes affecté au groupe respectif de dispositifs de communication d'utilisateurs.

12. Estimateur (7) de canal destiné à exécuter une estimation de canal concernant des séquences pilotes générées par un générateur (1) de séquences pilotes selon l'une quelconque des revendications 1, 4 à 10, l'estimateur de canal étant configuré pour estimer un canal d'un dispositif de communication d'utilisateur, auquel a été affectée une séquence pilote d'un sous-ensemble traité de séquences pilotes non orthogonales parmi les M sous-ensembles traités de séquences pilotes non orthogonales, en exécutant un des procédés suivants :

- un procédé (81) d'estimation de canal mono-utilisateur par l'utilisation d'un ou de plusieurs échantillons de signal reçus en réponse à une transmission de symboles de la séquence pilote, et par l'utilisation d'une seule colonne de la matrice complexe, qui a été utilisée pour générer le sous-ensemble traité de séquences pilotes non orthogonales parmi les M sous-ensembles traités de séquences pilotes non orthogonales, et par l'utilisation du sous-ensemble de séquences pilotes à traiter des séquences pilotes, sur la base duquel le sous-ensemble traité de séquences pilotes non orthogonales a été généré ;
- un procédé (82) d'estimation jointe de canal par l'utilisation : de l'échantillon ou des échantillons de signal, de la matrice complexe, et du sous-ensemble de séquences pilotes à traiter.

13. Procédé destiné à exécuter une estimation de canal concernant des séquences pilotes générées par un générateur (1) de séquences pilotes selon l'une quelconque des revendications 1, 4 à 10, le procédé comportant une estimation d'un canal d'un dispositif de communication d'utilisateur, auquel a été affectée une séquence pilote d'un sous-ensemble traité de séquences pilotes non orthogonales parmi les M sous-ensembles traités de séquences pilotes non orthogonales, ladite estimation comportant une des actions suivantes :

- exécution d'un procédé (81) d'estimation de canal mono-utilisateur par l'utilisation d'un ou de plusieurs échantillons de signal reçus en réponse à une transmission de symboles de la séquence pilote, et par l'utilisation d'une seule colonne de la matrice complexe, qui a été utilisée pour générer le sous-ensemble traité de séquences pilotes non orthogonales parmi les M sous-ensembles traités de séquences pilotes non orthogonales, et par l'utilisation du sous-ensemble de séquences pilotes à traiter des séquences pilotes, sur la base duquel le sous-ensemble traité de séquences pilotes non orthogonales a été généré ;
- exécution d'un procédé (82) d'estimation jointe de canal par l'utilisation : de l'échantillon ou des échantillons de signal, de la matrice complexe, et du sous-ensemble de séquences pilotes à traiter.

Fig. 1

```
┌─────────────────────────────────────────────┐
21 ─    │   Generate a pilot sequence set with         │
        │        M+1 pilot sequence sub-sets            │
        └─────────────────────────────────────────────┘
                            │
                            ▼
        ┌─────────────────────────────────────────────┐
22 ─    │   Assign M+1 pilot sequence sub-sets to       │
        │  M+1 groups of user communication devices     │
        └─────────────────────────────────────────────┘
```

Fig. 2

Fig. 3

EP 3 529 960 B1

EP 3 529 960 B1

41 — Divide an initial pilot sequence set in
a non-processed pilot sequence sub-set and
M to-be-processed pilot sequence sub-sets

42 — Generate M processed non-orthogonal pilot
sequence sub-sets
by processing
the M to-be-processed pilot sequence sub-sets

Fig. 4

EP 3 529 960 B1

Fig. 5

EP 3 529 960 B1

Fig. 6

Fig. 7

EP 3 529 960 B1

81

| Single user channel estimation |
|---|

82

| Joint channel estimation |
|---|

Fig. 8

Fig. 9

Fig. 10

111

1111_1

1111_2

1111_L

$$\left(\mathbf{U}_1^{orth}, \mathbf{U}_1^{non-orth}, \mathbf{W}_1^{non-orth}\right)$$

$$\left(\mathbf{U}_2^{orth}, \mathbf{U}_2^{non-orth}, \mathbf{W}_2^{non-orth}\right)$$

$$\vdots$$

$$\left(\mathbf{U}_L^{orth}, \mathbf{U}_L^{non-orth}, \mathbf{W}_L^{non-orth}\right)$$

Fig. 11

Fig. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016180450 A1

**Non-patent literature cited in the description**

- A Multi-Service Oriented Multiple-Access Scheme for Next-Generation Mobile Networks. **K. NASSAR et al.** 2016 European Conference on Networks and Communications (EUCNC). IEEE, 27 June 2016, 355-359